Europäisches Patentamt

European Patent Office

Office européen des brevets

(19)

(11) **EP 1 238 366 B1**

(12) **EUROPEAN PATENT SPECIFICATION**

(45) Date of publication and mention
of the grant of the patent:
**07.04.2004 Bulletin 2004/15**

(51) Int Cl.⁷: **G06T 7/00**, G06K 9/64

(21) Application number: **00979894.3**

(86) International application number:
**PCT/IL2000/000778**

(22) Date of filing: **22.11.2000**

(87) International publication number:
**WO 2001/045046 (21.06.2001 Gazette 2001/25)**

(54) **METHOD FOR REGISTERING SEPARATION PATTERNS**

VERFAHREN ZUR REGISTRIERUNG VON ABSCHEIDUNGSMUSTERN

PROCEDE PERMETTANT D'ENREGISTRER DES MOTIFS DE SEPARATION

(84) Designated Contracting States:
**AT BE CH CY DE DK ES FI FR GB GR IE IT LI LU MC NL PT SE TR**

(30) Priority: **16.12.1999 IL 13356299**

(43) Date of publication of application:
**11.09.2002 Bulletin 2002/37**

(73) Proprietor: **Compugen Ltd.**
**69512 Tel Aviv (IL)**

(72) Inventor: **SMILANSKY, Zeev**
**76850 Meishar (IL)**

(74) Representative: **VOSSIUS & PARTNER**
**Siebertstrasse 4**
**81675 München (DE)**

(56) References cited:
**WO-A-98/50885          US-A- 5 073 963**

- **BASRI R ET AL: "RECOGNITION USING REGION CORRESPONDENCES" INTERNATIONAL JOURNAL OF COMPUTER VISION,US,KLUWER ACADEMIC PUBLISHERS, NORWELL, vol. 25, no. 2, 1 November 1997 (1997-11-01), pages 145-166, XP000723757 ISSN: 0920-5691**
- **FLUSSER J ET AL: "A MOMENT-BASED APPROACH TO REGISTRATION OF IMAGES WITH AFFINE GEOMETRIC DISTORTION" IEEE TRANSACTIONS ON GEOSCIENCE AND REMOTE SENSING,US,IEEE INC. NEW YORK, vol. 32, no. 2, 1 March 1994 (1994-03-01), pages 382-387, XP000456930 ISSN: 0196-2892**
- **Pratt, W K: 'Digital Image Processing', Second Edition 1991, John Wiley & Sons, Inc., New York / Chinchester / Toronto; chapters 14.2.1., 16.1., 20.4.**
- **Hanaizumi N et al: 'An automated method for registration of satellite remote sensing images', 1993 International Geoscience and Remote Sensing Symposium (IGARSS'93), Tokyo, Japan, 18-21 Aug. 1993, New York, USA, ISBN 0-7803-1240-6, vol.3, pg.1348-1350**

**Description**

The invention relates to methods of registering a pair of one- or two-dimensional separation patterns, for example such patterns as are obtained by one-or two-dimensional electrophoresis.

Separation of a solubilized mixture of molecules into its components is routinely performed by forcing the mixture to migrate through a porous solid or fluid medium called the "*matrix*". The matrix and other relevant factors are selected so that the various molecules of the mixture have different migration rates in the matrix according to a particular criterion. The mixture thus separates into its components as it progresses through the matrix. Conditions may be chosen so that the migration rate of a molecule will depend, for example, upon its molecular weight or its electrical charge.

At the end of the separation, the components are visualized by various methods either in the matrix or as they are eluted from the matrix, thus producing a one-dimensional separation pattern consisting of an array of spots. Each spot in the array contains all of those molecules in the mixture that migrated through the matrix at a particular rate. The molecules in a given spot may all be identical. More commonly, however, the spot will still contain a mixture of different molecules. If for example the molecules were separated according to molecular weight, then a given spot will contain all the molecules in the original mixture having about the same molecular weight.

Gel electrophoresis is a solid phase separation technique. The matrix, in this case. is a gel slab typically of polyacrylamide, and the mixture is made to migrate through the gel under the influence of an electric field. In one application, molecules such as proteins or nucleotides separate according to their molecular weight. In another application, known as isoelectric focusing, molecules separate according to their isoelectric point (the pH at which a given molecule is electrically neutral). Other solid phase separation techniques include thin layer chromatography, paper chromatography, and liquid chromatography. Other separation techniques include mass spectroscopy.

Since a given spot in a one-dimensional separation pattern may still be a mixture of different molecules, it is common to subject the spots in the pattern to a second round of separation in which the molecules are made to migrate in a direction perpendicular to that of the first round. In the second round, conditions are chosen so that the molecular components of each spot are separated according to a different criterion than was used during the first round. After the second round of separation. the molecules are visualized producing a two-dimensional separation pattern. Each spot in the pattern will contain those molecules that migrated through the matrix at the same rates during both separation rounds. In most instances, each spot will contain a single molecular species.

For example, a mixture of proteins may first be separated by gel electrophoresis according to their isoelectric point and the resulting one-dimensional separation pattern subjected to a second round of electrophoresis according to molecular weight. More than 5,000 proteins can be resolved on a single gel by this type of two-dimensional electrophoresis.

It is often of interest to compare two or more two-dimensional separation patterns. For example, a two-dimensional electrophoretogram of blood plasma proteins from two individuals may be compared. Corresponding spots in the two patterns having different sizes (indicative of a different abundance of a protein in the two samples) or spots having different locations in the patterns (indicative of a mutated protein) are identified. Such differences may reflect the molecular basis of a disease.

In order to identify altered spots in two separation patterns, the two patterns must first be put in register. This involves identifying pairs of corresponding spots in the two patterns. Generating a one-to-one correspondence between spots in the two patterns (referred to herein as registration) is complicated by the fact that corresponding spots may have different locations and appearances in the two patterns not only due to intrinsic differences in the original samples but also due to unavoidable variability in sample preparation, matrix preparation, running conditions, visualization of the pattern and physical warping of the matrix.

Algorithms designed to register a pair of separation patterns are known in the art, for example Melanie™ and PDQuest™ marketed by Bio-Rad Laboratories and Bio Image™ marketed by Bio Image U.K. In these algorithms spots are detected in digital images of the patterns. This yields a *"spot-file"* for each pattern consisting of a list of the detected spots, their centers, boundaries and volume. The two images are then presented side by side to the user on a monitor screen and the two lists are aligned interactively. The user is prompted to indicate pairs of corresponding spots, which is often a laborious and time-consuming process.

U.S. Patent No. 5,073,963 to Sammons *et al*. discloses a computerized method for registering spots in a pair of two-dimensional gel electrophoretograms. Their method makes use of coordinate transformation techniques known in the art. A spot file for each pattern is obtained and a transformation of a predetermined type is sought that generates a one-to-one correspondence between the spots in one file and those of the other with minimal distortion of the patterns, as measured by a predetermined distortion criterion.

Pratt, W K: "Digital Image Processing" Second Edition 1991, John Wiley & sons, Inc., New York/Chinchester/Toronto, and Flusser, J., "A moment-based Approach to Registration of Images with Affine Geometric Distortion", IEEE Transactions on Geoscience and Remote Sensing, US, IEEE Inc New York, disclose methods for registering images. The scoring of images by the methods of these publications does not involve a comparison of a pixel in an image with neighboring pixels. For example, the Pratt reference uses a scoring that is based on a cross correlation of the two images. The cross correlation does not involve a comparison of the intensities at two neighboring pixels in the images. Subjecting the pixels in both images to the same rearrangement would not alter the cross-correlation between the two images (i.e. the scoring is not affected), even though rearranging the pixels changes a pixel's neighbors.

Within the context of the present invention, two explicitly described, calculable or measurable variables are considered equivalent to each other when the two variables are proportional to each other.

The present invention provides a method for registering digital images of two separation patterns of the same dimensionality. A pixel is a vector having the same dimensionality as the pattern. The first and second digital images are described by means of gray level function $f_1$ and $f_2$, respectively, defined on a pixel set. that describe the intensity of the image at each pixel. A region of the pixel set is a subset of the pixel set. The appearance of a region in a digital image is the restriction of its gray level function to the region.

In accordance with the invention, the registration is described by means of a transformation **T**, referred to as the global registration transformation, mapping at least a subset of the pixel set into the pixel set. This is in contrast to prior art methods where registration is performed by applying transformation techniques to the spot lists derived from the digital images. The present invention thus utilizes a larger amount of available data for the registration process than the prior art methods. The utilized data include not only the location and precise structure of the spots of the visualized molecules, but also reproducible staining in the patterns arising from other sources such as streaks and spot shapes.

In accordance with the invention, the global registration transformation **T** is obtained as follows. At least a portion of the pixel set is divided into m regions $R_1,...,R_k,...R_m$. For each region $R_k$, a finite sequence of $n_k$ transformations $S_{k,1},...,S_{k,j}...S_{k,nk}$ is selected, where each transformation $S_{k,j}$ maps $R_k$ into the pixel set. This generates a sequence of $n_k$ regions in the pixel set denoted by $S_{k,j}(R_k)$ (j=1,...$n_k$). For each of the $n_k$ regions $S_{k,j}(R_k)$ a similarity score is calculated which scores the similarity of the appearance of $R_k$ in the first digital image and the appearance of $S_{k,j}(R_k)$ in the second digital image. An optimal transformation $S_k$ is selected from among the $n_k$ transformations $S_{k,1},...,S_{k,j}...S_{k,m}$ for which the similarity score of $S_k(R_k)$ is maximal.

The global transformation **T** is now determined as follows. In each region $R_k$, a pixel $\mathbf{p}_k$ is selected. $\mathbf{p}_k$ may be for example the center of gravity of $R_k$. A global transformation **T** is then found based upon at least some of the $\mathbf{S}_k(\mathbf{p}_k)$, for k=1,...m.

The first image may be partitioned into any number m of regions. As extreme examples, it may be partitioned into a single region, or each pixel in the image may be taken as a separate region. The regions may have any shape such as squares. rectangles, circles, ellipses or irregular shapes. The regions in a partition may all be of the same shape, or there may be regions in the partition of different shapes. The regions may or may not overlap. The image may be partitioned into a regular array of identical regions. The partition may be formed taking into account the distribution of spots in the separation pattern. For example, a partition may be formed so that no regions in the partition is devoid of spots while areas in the pattern with many will be divided into a large number of small regions.

In a preferred embodiment, the regions $R_k$, are chosen so that each one contains at least two spots, and most preferably three or four spots of the first digital image. If a region $R_k$ contains too many spots, it may not be satisfactorily transformed by any of the transformations $\mathbf{S}_{k,j}$ as assessed by the similarity scores. On the other hand, regions that are have too few spots may have a geometric signature that is not sufficiently unique, in which case several of the transformations $\mathbf{S}_{k,j}$ may have high similarity scores. For example, a region that contains only one spot can potentially match any other single-spot region. Spots may be detected by methods known in the art. For example, the boundary of a spot in a digital image may be recognized as a location where the Laplacian of the gray level function of the pattern exceeds a threshold value. Thus, for example, the number of spots in the first digital image may be determined and the average area of a region containing four spots calculated. A region of this area is constructed around every spot in the first pattern, and a score calculated for each of the regions that takes into account the number of spots in the region, their contrast and area. For each pair of strongly overlapping regions, the one with the lowest score is discarded.

In accordance with another embodiment, regions in the pixel set are first designated and then ordered. For example, a score is calculated for each of the regions that takes into account the number of spots in the region in the first image, their contrast and area. A region $R_1$ is selected as the region having a high score near the center of the first digital image. The remaining regions are then sequentially ordered according to increasing distance from the first region.

In yet another embodiment, the transformations $S_{k,j}$ are translations of the form $\mathbf{S}_{k,j}(\mathbf{x})=\mathbf{x}+\mathbf{a}_{k,j}$, where $\mathbf{a}_{k,j}$ are translation vectors. The translation vectors may be selected, for example, among lattice points of the form $l\mathbf{s}$, for one-dimensional digital images, and $l\mathbf{s}_1+h\mathbf{s}_2$ for two-dimensional images, where s, $s_1$ and $s_2$ are vectors, $s_1$ and $s_2$ are linearly independent, and $l$ an $h$ are integers satisfying $|l|<d_1$ and $|h|<d_2$ for predetermined constants $d_1$ and $d_2$. The vector s or the vectors $s_1$ and $s_2$ are most preferably chosen such that their magnitudes are approximately equal to the radius of the smallest expected spot in the digital image and will typically be around 3 pixels. Other types of transformations $S_{k,j}$ are also envisaged within the scope of the invention including linear transformations and affine transformations. The transformations $S_{k,j}$ may take into account torn parts or warping of the matrix, for example by using models of deformable membranes as disclosed, for example, in Singh et al., 1998.

The similarity score is designed to take into account differential expression, different staining qualities or techniques, and other irregularities in the two images such as artefactual staining, contamination, air bubbles etc. The scoring function compares the appearance of a region $R_k$ in the first image to that of each of the $n_k$ regions $\mathbf{S}_{k,j}(\mathbf{R}_k)$ in the second image. The scoring functions thus use nearly all of the information contained in the two images. This is in strong contrast with prior art registration methods that use only the list of approximated spot profiles, or Gaussians of the images.

The similarity score of $R_k$ in the first image and $S_{k,j}(R_k)$ in the second image may be described as a function having, for example, the form $\Sigma G(x, \mathbf{S}_{k,j}(\mathbf{x}))$ where the sum is taken over all $x \in R_k$. G is a function that preferably increases if the contrast at $\mathbf{x}$ and $\mathbf{S}_{k,j}(\mathbf{x})$, in the first and second images, respectively, both exceed a predetermined minimal contrast. G may be further increased, for example, when the contrast at $\mathbf{x}$ and $\mathbf{S}_{k,j}(\mathbf{x})$ are both above a second higher predetermined level. This favors matching of strong spots over matching of faint spots or spots with dissimilar contrast. The score may also take into account a comparison of the scalar product of the two intensity gradient vectors. This gives an added bonus for spots that have about the same size and shape. This contribution arises from the edge pixels of the spots. In cases where the edges overlap and are similarly oriented, the score is increased. Where there is no correlation or negative correlation, it diminishes. This contribution mimics some of the processing that the human eye does when attempting to match gel images. It is reasonable to prefer a transformation that matches spots with similar contrast, size and shape, to one that matches spots that differ widely.

The selection of the optimal transformations $S_1,...,S_k,...,S_m$ may be performed iteratively. For example, once the optimal transformations $S_1,...,S_{k-1}$ have been selected, a similarity score may be used that prefers an $S_k$ that is similar to one or more of any of the $S_1,...,S_{k-1}$.

The global transformation **T** may be obtained from the $\mathbf{S}_k(\mathbf{p}_k)$ by several different methods as are known in the art. If the number of regions (m) is 1, 2 or 3, **T** may be defined as the unique translation, linear transformation, or affine transformation, respectively, determined by the constraints $\mathbf{T}(\mathbf{p}_k)=\mathbf{S}_k(\mathbf{p}_k)$, for k=1,...m. Even when m is large, a translation may be satisfactory, for example, if the two images were obtained from different scans of the same separation pattern. If the images are from different patterns, but the separation technique is known to have very tight geometric tolerances (for example, by using a matrix having a rigid backing), then an affine transformation may be satisfactory. An affine transformation compensates for shift, rotation, scaling, and skew of the axes, but does not compensate for other types of deformation such as warping of the matrix. In cases such as these, **T** may be a radial basis function transformation, for example, as disclosed in Poggio and Girosi 1989, Poggio and Girosi 1990, or Girosi *et al. 1995*, or a Delaunay triangulation transformation, as disclosed, for example, in Kanaganathan *et al.* 1991, or Baker 1987. Once the global transformation has been found the image can be transformed in one of several standard known ways such as nearest neighbor, bilinear, or bicubic interpolation.

Once a global transformation function has been obtained in accordance with the invention, it may be revised, for example, using optical flow equations, as disclosed, for example in Aggarwal *et al.* 1988, or Huang *et al.*, 1994. In this method, a desired correction vector w($\mathbf{x}$) is found by minimizing the expression $\Sigma(\bigtriangledown g \cdot w\text{-}dg)^2$, wherein $\bigtriangledown g$ is the gradient vector of the intensity at $\mathbf{x}$ and $dg$ is the gray level difference between $\mathbf{x}$ and T($\mathbf{x}$). The minimum is easily found using least mean square fitting techniques for example as disclosed in Press *et al.*, *1992*. T($\mathbf{x}$) is then replaced with **T**($\mathbf{x}$)+w($\mathbf{x}$). This revision improves robustness and precision and may be repeated several times.

The results of the registration may be presented to a user by superimposing the two digital images on a monitor screen such that a pixel in one digital image is superimposed upon its image under the transformation in the other. The two digital images may be false-colored. If, for example, the spots in one image are false colored blue, and those in the other digital image are false-colored yellow, then any superimposed spots in the superimposition will appear green.

The invention may be used to compare each of several separation patterns to one particular separation pattern referred to as the "*master pattern* ". The master pattern may be annotated by compiling information on the composition of each spot in the pattern. For example, a two-dimensional electrophoretogram of blood plasma proteins from a healthy individual may be prepared and used as a master pattern. Test electrophoretograms from other individuals are then registered with the master pattern. When the digital image of a test pattern that has been registered with the master pattern is then viewed on a monitor screen, a spot in the test pattern may he selected, and the compiled information on the spot presented to the user.

The invention may be also be used to follow time dependent changes in molecular composition. For example, samples of blood plasma of proteins from an individual undergoing medical treatment may be obtained at various times and a two-dimensional separation pattern of each sample prepared. Each separation pattern may be registered with a master pattern or the previous pattern in the sequence. The registered patterns may then be displayed sequentially in time on a monitor screen so as to animate time dependent changes in the composition of the samples.

It will also be understood that the invention contemplates a computer program being readable by a computer for executing the method of the invention. The invention further contemplates a machine-readable memory tangibly embodying a program of instructions executable by the machine for executing the method of the invention.

Thus, in its first aspect the invention provides a method for registering first and second digital images of first and second separation patterns, respectively, the digital images being described by gray level functions $f_1$ and $f_2$, respectively, defined on a pixel set, the method comprising the steps of:

> **a** dividing at least a portion of the pixel set into m regions $R_1,...,R_k,...R_m$, the m regions each having an appearance in the first image;
> **b** for each region $R_k$,
>
>> **ba** selecting a finite sequence of $n_k$ transformations $S_{k,1}...,S_{k,j},...S_{k,nk}$, each transformation mapping $R_k$ into the pixel set of the second image;
>> **bb** generating $n_k$ regions $S_{k,j}(R_k)$ for j=1,...$n_k$ in the pixel set, the $n_k$ regions each having an appearance in the second digital image;
>> **bc** calculating a similarity score for each of the $n_k$ regions $S_{k,j}(R_k)$ for j=1,...$n_k$, the similarity score scoring the similarity of the appearance of $R_k$ in the first digital image and the appearance $S_{k,j}(R_k)$ in the second digital image;
>> **bd** selecting a transformation $S_k$ from among the $n_k$ transformations $S_{k,1},...,S_{k,j},...S_{k,nk}$ for which the similarity score of $S_k(R_k)$ is maximal among the similarity scores of the $S_{k,j}(R_k)$ for j=1,...$n_k$; and
>> **be** selecting a pixel $p_k$ in $R_k$;
>
> **c** defining a global transformation $T$ mapping at least a portion of the pixel set into the pixel set of the second image based upon at least some of the $S_k(p_k)$; the transformation $T$ having an inverse $T^{-1}$, the second image having an image under $T^{-1}$; and
> **d** obtaining the image of the second image under $T^{-1}$, to produce a modified second image to be used for registration with the first image.

In its second aspect, the invention provides a program storage device readable by machine tangibly embodying a program of instructions executable by the machine to perform method steps for registering first and second digital images of first and second separation patterns, respectively, the digital images being described by gray level functions $f_1$ and $f_2$, respectively, defined on a pixel set, the registering comprising the steps of:

> **a** dividing at least a portion of the pixel set into m regions $R_1,...,R_k,...R_m$, the m regions each having an appearance in the first image;
> **b** for each region $R_k$,
>
>> **ba** selecting a finite sequence of $n_k$ transformations $S_{k,1},...,S_{k,j},...S_{k,nk}$, each transformation mapping $R_k$ into the pixel set of the second image;
>> **bb** generating $n_k$ regions $S_{k,j}(R_k)$ for j=1,...$n_k$ in the pixel set, the $n_k$ regions each having an appearance in the second image;
>> **bc** calculating a similarity score for each of the $n_k$ regions $S_{k,j}(R_k)$ for j=1,...$n_k$, the similarity score scoring the similarity of the appearance of $R_k$ in the first image and the appearance $S_{k,j}(R_k)$ in the second image; and
>> **bd** selecting a transformation $S_k$ from among the $n_k$ transformations $S_{k,1},...,S_{k,j},...S_{k,nk}$ for which the similarity score of $S_k(R_k)$ is maximal among the similarity scores of the $S_{k,j}(R_k)$ for j=1,...$n_k$;
>> **be** selecting a pixel $p_k$ in $R_k$;
>
> **c** defining a global transformation $T$ mapping at least a portion of the pixel set into the pixel set of the second image based upon at least some of the $S_k(p_k)$; the transformation $T$ having an inverse $T^{-1}$, the second digital image having an image under $T^{-1}$; and
> **d** obtaining image of the second image under $T^{-1}$, to produce a modified second image to be used for registration with the first image.

In its third aspect, the invention provides a computer program product having computer readable program code embodied therein for registering first and second digital images of first and second separation patterns, respectively, the digital images being described by gray level functions $f_1$ and $f_2$, respectively, defined on a pixel set, the registering comprising the steps of:

> a dividing at least a portion of the pixel set into m regions $R_1,...,R_k,...R_m$, the m regions each having an appearance in the first image;

**b** for each region $R_k$,

**ba** selecting a finite sequence of $n_k$ transformations $S_{k,1},...,S_{k,j},...S_{k,nk}$, each transformation mapping $R_k$ into the pixel set of the second image;

**bb** generating $n_k$ regions $\mathbf{S}_{k,j}(R_k)$ for j=1,...$n_k$ in the second digital image, $n_k$ regions each having an appearance in the second image;

**bc** calculating a similarity score for each of the $n_k$ regions $\mathbf{S}_{k,j}(\mathbf{R}_k)$ for j=1,...$n_k$, the similarity score scoring the similarity of the appearance of $R_k$ in the first image and the appearance of $\mathbf{S}_{k,j}(\mathbf{R}_k)$ in the second image;

**bd** selecting a transformation $\mathbf{S}_k$ from among the $n_k$ transformations $S_{k,1},...,S_{k,j},...S_{k,nk}$ for which the similarity score of $\mathbf{S}_k(\mathbf{R}_k)$ is maximal among the similarity scores of the $\mathbf{S}_{k,j}(R_k)$ for j=1,...$n_k$;

**c** defining a global transformation $\mathbf{T}$ mapping at least a portion of the pixels in the pixel set into the pixel set of the second image based

**d** obtaining the image of the second image under $\mathbf{T}^{-1}$, to produce a modified second image to be used for registration with the first image.

In its fourth aspect, the invention provides a program storage device readable by machine, tangibly embodying a program of instructions executable by the machine to perform method steps for registering a sequence of n digital images $I_1,...I_n$ of n separation patterns, respectively, the digital images being described by gray level functions defined on a pixel set, the method comprising the steps of:

**a** registering the digital images $I_1$ and $I_2$ according to any one of Claims 1 to 17; to produce an image $I'_2$ that is the modified image of $I_2$;

**b** registering $I'_k$ and $I_{k+1}$, for all k from 2 to n-1 according to any one of Claims 1 to 17 to produce an image $I'_{k+1}$, where $I'_k$ and $I'_{k+1}$ are the modified images of $I_k$ and $I_{k+1}$, respectively.

In its fifth aspect, the invention provides a computer program product comprising a computer useable medium having computer readable program code embodied therein for registering a sequence of n digital images $I_1,...I_n$ of n separation patterns, respectively, the digital images being described by gray level functions defined on a pixel set, the computer program product comprising:

**a** computer readable program code for causing the computer to register the digital images $I_1$ and $I_2$ according to any one of Claims 1 to 17; to produce an image $I'_2$ that is the modified image of $I_2$;

**b** computer readable program code for causing the computer to register $I'_k$ and $I_{k+1}$, for all k from 2 to n-1 according to any one of Claims 1 to 17 to produce an image $I'_{k+1}$, where $I'_k$ and $I'_{k+1}$ are the modified images of $I_k$ and $I_{k+1}$, respectively.

In its sixth aspect, the invention provides a program storage device readable by machine, tangibly embodying a program of instructions executable by the machine to perform method steps for registering a sequence of n digital images $I_1,...I_n$ of n separation patterns, respectively, the digital images being described by gray level functions defined on a pixel set, the method comprising registering a master pattern and the image $I_k$ according to any one of Claims 1 to 17 so as to produce an image $I'_k$, where $I'_k$ is the modified image of $I_k$, for all k from 1 to n.

In its seventh aspect, the invention provides a program storage device readable by machine, tangibly embodying a program of instructions executable by the machine to perform method steps for displaying a sequence of n digital images $I_1,...I_n$ of n separation patterns, respectively, the digital images being described by gray level functions defined on a pixel set, the method comprising:

**a** registering the sequence of images according to Claim 36, so as to produce a second sequence of images $I'_1$, $I'_2...I'_n$, where $I'_1$ is the image $I_1$ and $I'_k$ is the modified image of $I_k$, for k from 2 to n; and

**b** displaying the second sequence of images $I'_1,...I'_n$ sequentially on a display.

In its eighth aspect, the invention provides a computer program product comprising a computer useable medium having computer readable program code embodied therein for displaying a sequence of n digital images $I_n,...I_n$ of n separation patterns, respectively, the digital images being described by gray level functions defined on a pixel set, the computer program product comprising:

**a** computer readable program code for causing the computer to register the sequence of images according to Claim 36, so as to produce a second sequence of images $I'_1$, $I'_2$...$I'_n$, where $I'_1$ is the image $I_1$ and $I'_k$ is the modified image of $I_k$, for k from 2 to n; and

**b** computer readable program code for causing the computer to display the second sequence of images $I'_1$,...$I'_n$ sequentially on a display.

In its ninth aspect, the invention provides, a program storage device readable by machine, tangibly embodying a program of instructions executable by the machine to perform method steps for displaying a sequence of n digital images $I_n$,...$I_n$ of n separation patterns, respectively, the digital images being described by gray level functions defined on a pixel set, the method comprising:

**a** registering the sequence of images according to Claim 37 so as to produce a second sequence of images $I'_1$, $I'_2$,...$I'_n$, where $I'_k$ is the modified image of $I_k$; and

**b** displaying the second sequence of images $I'_1$,...$I'_n$ sequentially on a display.

In its tenth aspect, the invention provides a computer program product comprising a computer useable medium having computer readable program code embodied therein for displaying a sequence of n digital images In,...In of n separation patterns, respectively, the digital images being described by gray level functions defined on a pixel set, the computer program product comprising:

**a** computer readable program code for causing the computer to register the sequence of images according to Claim 37 so as to produce a second sequence of images $I'_1$, $I'_2$,...$I'_n$, where $I'_k$ is the modified image of $I_k$; and

**b** computer readable program code for causing the computer to display the second sequence of images $I'_1$,...$I'_n$ sequentially on a display.

In order to understand the invention and to see how it may be carried out in practice, preferred embodiments will now be described, by way of non-limiting examples only, with reference to the accompanying drawings, in which:

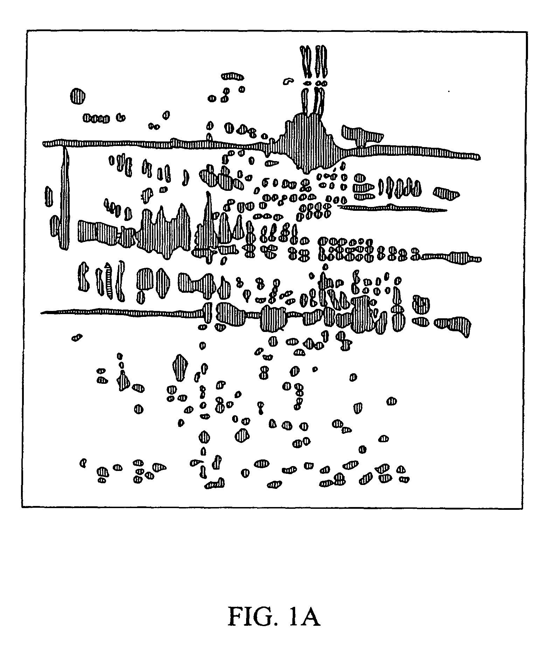

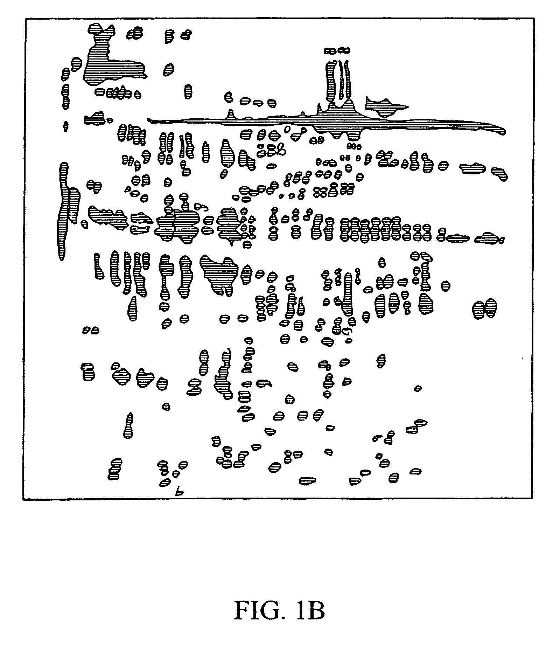

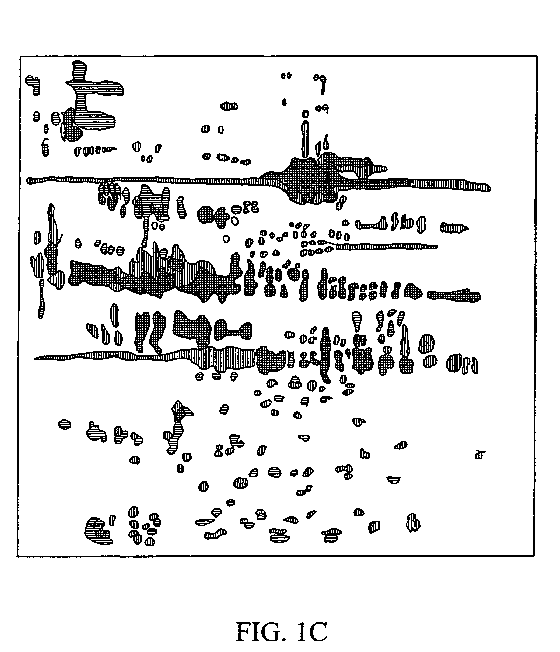

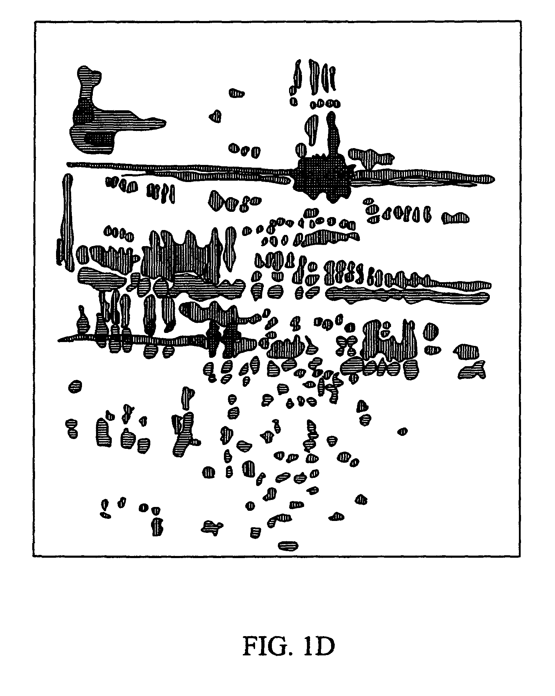

**Figs. 1a** and **1b** show a digital image of a first and second two-dimensional separation pattern, respectively, Fig. **1d** shows a superimposition of the patterns shown in Figs. **1a** and **1b**, and Fig. **1c** shows the registration of the two images according to one embodiment of the invention;

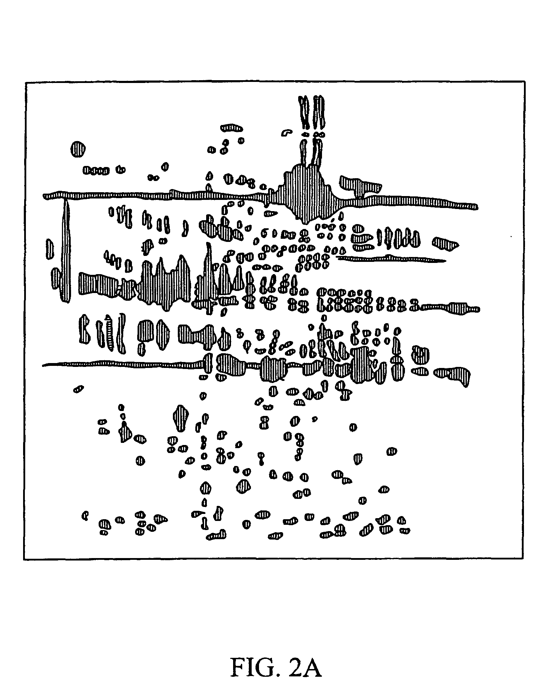

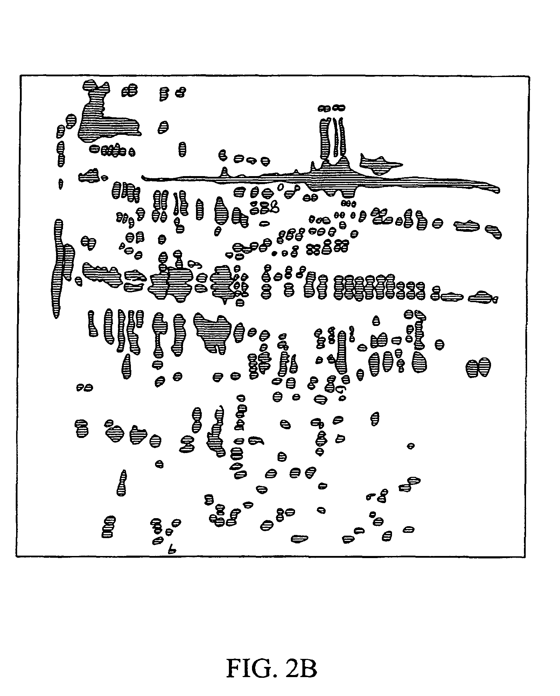

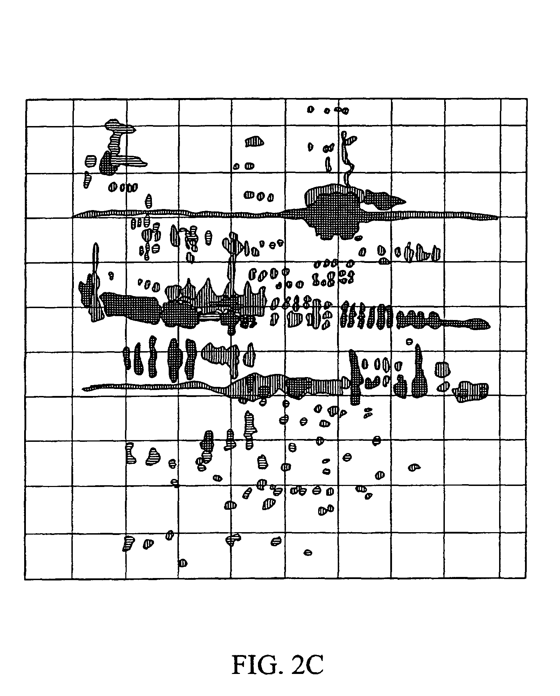

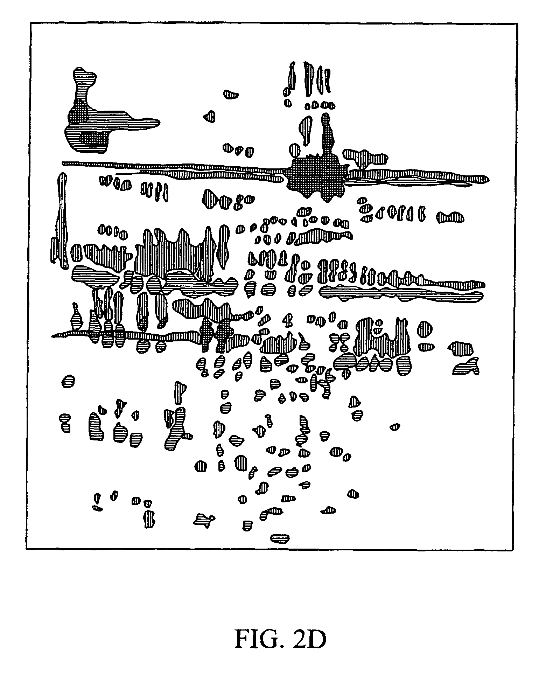

**Figs. 2a** and **2b** show a digital image of a first and second two-dimensional separation pattern, respectively, Fig. **2d** shows a superimposition of the patterns shown in Figs. **2a** and **2b**, and Fig. **2c** shows the registration of the two images according to a second embodiment of the invention; and

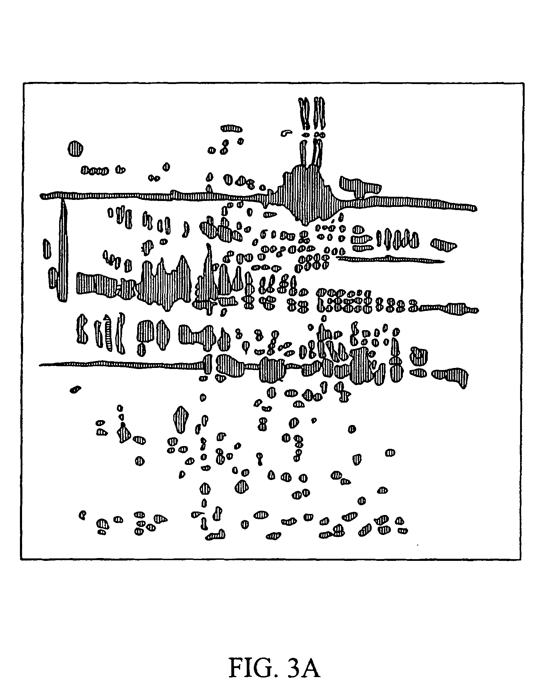

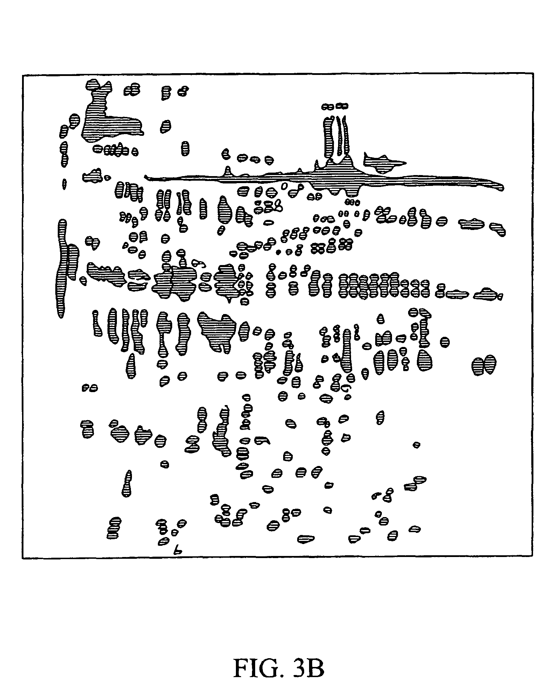

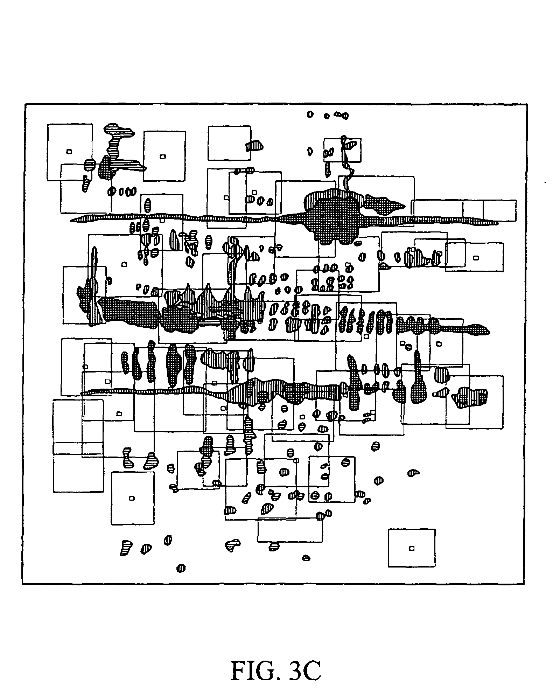

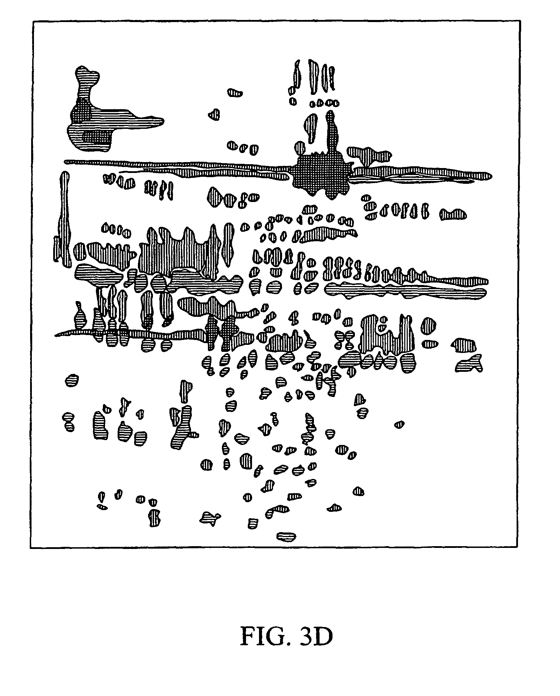

**Figs. 3a** and **3b** show a digital image of a first and second two-dimensional separation pattern, respectively, Fig. **3d** shows a superimposition of the patterns shown in Figs. **3a** and **3b,** and Fig. **3c** shows the registration of the two images according to a third embodiment of the invention.

### First Embodiment: Global Affine Transformation Model

The first embodiment will be demonstrated in relation to a pair of two-dimensional images. The pixel set is partitioned into a single region (the entire pixel set) and the identity transformation is used as the local transformation $S_1$. The global transformation **T** is an affine transformation of the form

$$T(x_1, x_2) = \begin{pmatrix} a_{1,1} & a_{1,2} \\ a_{2,1} & a_{2,2} \end{pmatrix} \begin{pmatrix} x_1 \\ x_2 \end{pmatrix} + \begin{pmatrix} b_1 \\ b_2 \end{pmatrix}$$

**T** is determined as follows. Let $\mathbf{x}^1$,...$\mathbf{x}^n$ be the n pixels in the pixel set, where $x^k = (x_1^k, x_2^k)$. Define $\mathbf{T}_0$ as the identity transformation on the pixel set, and define the gray level function go by $g_0(\mathbf{x}^k) = f_1(\mathbf{x}^k)$, for every pixel $\mathbf{x}^k$ in the pixel set, where $f_1$ is the gray level function of the first image. Once $\mathbf{T}_i$ and $g_i$ have been found, $\mathbf{T}_{i+1}$ and $g_{i+1}$ are found as follows. Denote by $\nabla(\mathbf{x}^k) = (\nabla_1(\mathbf{x}^k), \nabla_2(\mathbf{x}^k)) = (\nabla(g_i(\mathbf{x}^k)) + \nabla(f_2(\mathbf{x}^k)))/2$ the average gradient vector of the two gray level functions $g_i$ and $f_2$, where $f_2$ is the gray level function of the second image. $\mathbf{T}_{i+1}$ is an affine transformation whose six parameters $a_{1,1}$, $a_{1,2}$, $a_{2,1}$, $a_{2,2}$, $b_1$, and $b_2$ are found by solving the following overdetermined system of linear equations:

$$\begin{pmatrix} x_1^1 \nabla_1(x^1) & x_2^1 \nabla_1(x^1) & x_1^1 \nabla_2(x^1) & x_2^1 \nabla_2(x^1) & \nabla_1(x^1) & \nabla_2(x^1) \\ x_1^2 \nabla_1(x^2) & x_2^2 \nabla_1(x^2) & x_1^2 \nabla_2(x^2) & x_2^2 \nabla_2(x^2) & \nabla_1(x^2) & \nabla_2(x^2) \\ & & & & & \\ & & & & & \\ & & \cdots & & & \\ x_1^n \nabla_1(x^n) & x_2^n \nabla_1(x^n) & x_1^n \nabla_2(x^n) & x_2^n \nabla_2(x^n) & \nabla_1(x^n) & \nabla_1(x^n) \end{pmatrix} \cdot \begin{pmatrix} a_{11} \\ a_{12} \\ a_{21} \\ a_{22} \\ b_1 \\ b_2 \end{pmatrix} =$$

$$\begin{pmatrix} g_i(x^1) - f_2(x^1) \\ g_i(x^2) - f_2(x^2) \\ \\ \\ \cdots \\ \\ g_i(x^n) - f_2(x^n) \end{pmatrix}$$

$g_{i+1}$ is then defined by $g_{i+1}(\mathbf{x}^k)=g_i(\mathbf{T}_i(\mathbf{x}^k))$. A transformation $\mathbf{A}_i$ is defined as the composition of $\mathbf{T}_1$ to $\mathbf{T}_i$, $\mathbf{A}_i=\mathbf{T}_i$? $\mathbf{T}_{i-1}$?...?$\mathbf{T}_1$. The process is terminated when an $\mathbf{A}_i$ is obtained for which the fraction of pixels $\mathbf{x}^k$ in the pixel set for which the distance between $\mathbf{x}^k$ and $\mathbf{A}_i(\mathbf{x}^k)$ exceeds a predetermined distance (for example 10 pixels) is small (for example, less than 10% of all of the pixels in the pixel set). The global transformation $\mathbf{T}$ is then defined as $\mathbf{T}=\mathbf{A}_i$.

If at any stage, the transformation $\mathbf{T}_i$ is large in the sense that regions of the first image are moved large distances in the second image, then the images may be preliminarily blurred and decimated. This may be performed by methods known in the art for example as described in E. Adelson, *et al*. 1984. The preferred way of blurring and decimating the image is to average every 3X3 subarray of pixels of the images into one pixel of the decimated/blurred image. The image can then be blurred further, by a binomial operator of the form

$$\begin{pmatrix} 1 & 2 & 1 \\ 2 & 4 & 2 \\ 1 & 2 & 1 \end{pmatrix}/16.$$

$\mathbf{T}_i$ may then be modified by replacing $b_1$ and $b_2$ with $3b_1$ and $3b_2$.

Figs. 1a and 2a schematically show first and second digital images, respectively, of two-dimensional electrophoretograms of urine proteins. The proteins were first separated in the horizontal direction according to their isoelectic point and subsequently in the vertical direction according to their molecular weight. In Figs. 1a and 1b, each spot is represented schematically by a black curve delineating its boundary. The interior of each spot is indicated by hatching that is vertical in Fig. 1a and horizontal in Fig. 1b. Fig. 1d shows a superimposition of the images. A global transformation $\mathbf{T}$ between the two separation patterns was obtained in accordance with this embodiment and is shown in Fig. 1c. In Fig. 1c, the appearance of a pixel $\mathbf{x}$ in the first digital image has been superimposed on the appearance of its image $\mathbf{T}(\mathbf{x})$ in the second image. Regions of overlap of spots in the two images appear in Figs. 1c and 1d by vertical hatching superimposed on horizontal hatching. The amount of overlap is substantially greater in Fig. 1c compared to Fig. 1d.

**Second Embodiment: Two Dimensional Spline Transformation.**

The second embodiment will be demonstrated in relation to a pair of two-dimensional images. The pixel set is partitioned into a grid of rectangles $R_k$, all having the same dimensions whose centers lie on a lattice spanned by two linearly independent vectors $\mathbf{s}_1$ and $\mathbf{s}_2$. The local transformations $\mathbf{S}_k$ are translations and the global transformation $\mathbf{T}$ is a spline.

The width $w$ and height $h$ of the rectangles, can be predetermined constants or determined heuristically in each case. For example, a spot of diameter $d$ (in pixels) in the first image may be selected and the parameters obtained by $w = h = |s_1|=|s_2|=10d$.

Background contrast images (BCI) $B_1$ and $B_2$ are calculated for the first and second images, respectively. The BCI is a function of the pixels in an image the value of which is 0 for pixels not belonging to a spot. For pixels in a spot, the value of the BCI is a reflection of the contrast of the spot. For two pixels $\mathbf{x}$ and $\mathbf{y}$, the pixel score function *Psf*(*x*,*y*) is defined as follows: if $B_1(\mathbf{x})$ or $B_2(\mathbf{y})$ is zero, then *Psf*(*x*,*y*) = 0. Otherwise, $\mathbf{x}$ is in a spot in the first image and $\mathbf{y}$ is in a spot in the second image, and

$$Psf(x,y) = 1 + \alpha \min(B_1(x), B_2(y)) + \beta\langle \triangledown(f_1(x)), \triangledown(f_2(y))\rangle^{\frac{1}{2}},$$

where $\langle \triangledown(f_1(x)), \triangledown(f_2(y))\rangle$ indicates the absolute value of the scalar product of the two gradient vectors $\triangledown(f_1(x))$ and $\triangledown(f_2(y))$. This formula allows a fixed contribution (1) to the score if $\mathbf{x}$ and $\mathbf{y}$ both belong to a spot. This allows spots representing differently expressed proteins to match. There is also a "bonus" for cases where both spots have high contrast, by increasing the score in correlation with the minimum of the two contrast values. This encourages matching of strong spots over matching of faint spots or spots with dissimilar contrast. There is also a contribution from the scalar product of the two gradient vectors. This gives an added bonus for spots that have the same size and shape. Where there is no correlation or negative correlation, the score is low. This mimics some of the processing that the human eye does when attempting to match images. The constants $\alpha$, $\beta$ are weighting factors that determine the relative contribution of the three summands in the definition of *Psf*. $\alpha$ will typically be set to the value of the minimal contrast required for a spot. Typical values of $\alpha$ and $\beta$ are $\alpha = \beta = 0.1$.

The local transformations $\mathbf{S}_{k,j}$ are translations of the form $\mathbf{S}_{k,j}(\mathbf{x})=\mathbf{x}+a_{k,j}$, for j=1,...$n_k$. The $a_{k,j}$ are selected so that the centers of the regions $\mathbf{S}_{k,j}(R_k)$ in the second image form a lattice with a typical distance of *s* pixels between neighbors, where *s* is the radius of the smallest expected spot on the gel. This decreases the computational load by $s^2$ (typically, s=3). The $a_{k,j}$ are also selected so that the regions $\mathbf{S}_{k,j}(R_k)$ cover an area large enough that $\mathbf{S}_k(R_k)$ lies far from the boundary of the union of all of the regions $\mathbf{S}_{k,j}(R_k)$. The score function for $\mathbf{S}_{k,j}$ is the sum of the *psf*($\mathbf{x}$, $\mathbf{S}_{k,j}(\mathbf{x})$) for all $\mathbf{x}$ in $R_k$. An $\mathbf{S}_{k,j}$ having maximal score is then selected and designated as $\mathbf{S}_k$. As in the first embodiment, this selection of $\mathbf{S}_k$ may be refined, for example, by optical flow techniques as disclosed, for example, in Aggarwal *et al.*, 1988, Huang *et al.* 1994. Alternatively, the $\mathbf{S}_k$ may be refined taking into account the scores of rectangles in the neighborhood of the selected one and determining optimal shift. Once an $\mathbf{S}_k$ is obtained, it may be checked. For example, if it is on the boundary of the original search area, or its score is below a predetermined threshold, or it deviates substantially from its nearest neighbors, it may be discarded.

The global transformation in this embodiment is a two dimensional spline calculated from the transformations $\mathbf{S}_k$ by methods known in the art, for example as disclosed in de Boor, 1978. Since the $a_{k,j}$ are computed along a grid, the spline can be computed first on the horizontal lines, and than on the vertical lines.

Figs. 2a and 2b schematically show first and second digital images, respectively, of two-dimensional electrophoretograms of urine proteins. The proteins were first separated in the horizontal direction according to their isoelectic point and subsequently in the vertical direction according to their molecular weight. In Figs. 2a and 2b, each spot is represented schematically by a black curve delineating its boundary. The interior of each spot is indicated by hatching that is vertical in Fig. 2a and horizontal in Fig. 2b. Fig 2d shows a superimposition of the images. The first separation pattern has been divided into rectangles whose centers lie on a lattice. A global transformation $\mathbf{T}$ between the two images was obtained in accordance with this embodiment and is shown in Fig. 2c. In Fig. 2c, a pixel $\mathbf{x}$ in the first digital image has been superimposed on its image $\mathbf{T}(\mathbf{x})$ in the second image. Fig. 2c also shows the system of rectangles that was used in this example. Regions of overlap of spots in the two images appear in Figs. 2c and 2d by vertical hatching superimposed on horizontal hatching. The amount of overlap is substantially greater in Fig. 2c compared to Fig. 2d.

### Third Embodiment: Delaunay Triangulation Transformation Model

The third embodiment will now be described in relation to a pair of two-dimensional images. As in the second embodiment, in this embodiment the pixel set is partitioned into rectangles $R_k$. However, the rectangles are selected in accordance with the data and do not necessarily form a grid. The local transformations $\mathbf{S}_{k,j}$ are translations and the global transformation $\mathbf{T}$ is a spline.

The rectangle sequence determination proceeds as follows: A spot list is first prepared of the first image by methods known in the art, for example as described in Gonzalez et al., 1977 or Pratt, 1991. The average area S of a rectangle (in pixels) containing four spots is $S = 4A/n$, where *A* is the number of pixels in the pixel set, and n is the total number of spots in the image. A rectangle is constructed with area A around every spot. In each rectangle, all spots are found with contrast above a given threshold. A score s is calculated for the rectangle by $s = a[n]\cdot c$, where n is the number of spots in the rectangle, c is the average contrast of the spots, and *a*[n] is a weighting function that prefers rectangles containing a number of spots close to predetermined number. In a preferred embodiment, rectangles are preferred in which the number of spots is around 3. In this case, *a* can be defined, for example, by *0,10,15,20, 15, 12, 10*, *8, 7, 6, 5, 4, 3, 2, 1*, for n equal to 0 to 14, and a[n]=0 for n greater than 14. For each pair of strongly overlapping rectangles, the one with the higher score is retained and the one with the lower score is deleted.

The rectangles are now ordered. A rectangle $R_1$ with a high score is found near the center of the image. The remaining rectangles are subsequently ordered by increasing distance from $R_1$.

The global transformation in this embodiment is an affine transformation and a Delaunay interpolation triangulation transformation. The affine transformation is obtained as in the first embodiment, and then the Delaunay interpolation is used for the differences between the $\mathbf{S}_k$ and the affine transformation. This provides a stable and robust transformation that is easy extrapolated, as well as a method for dealing with relatively small and non-uniform perturbations.

The global transformation in each of the $R_k$ is obtained in a process similar to that of the first embodiment. However, in this embodiment, the global transformation is recomputed after each $\mathbf{S}_k$ has been found. Since initially there may be insufficient parameters to compute the affine transformation, simpler transformations are computed in the first three steps (identity, translation, linear transformation). At each stage, $\mathbf{S}_k$ is used in obtaining the shift vector $\mathbf{a}_{k+1}$ of $S_{k+1}$

A Delaunay triangulation is obtained by methods known in the art, for example, as described in Kanaganathan *et al.,* 1991. The Delaunay triangulation is used to interpolate the global transformation $\mathbf{T}$ in the convex hull of the triangulation vertices. At the four comers of the image, the Delaunay triangulation is set to zero so that the corners of the image, the global transformation $\mathbf{T}$ is affine only.

Figs. 3a and 3b schematically show first and second digital images, respectively, of two-dimensional electrophoretograms of urine proteins. The proteins were first separated in the horizontal direction according to their isoelectic point and subsequently in the vertical direction according to their molecular weight. In Figs. 3a and 3b, each spot is represented schematically by a black curve delineating its boundary. Fig. 3d shows a superimposition of the images. The interior of each spot is indicated by hatching that is vertical in Fig. 3a and horizontal in Fig. 3b. The pixel set was divided into rectangles of different sizes so that each rectangle has about the same number of spots. A global transformation $\mathbf{T}$ was obtained in accordance with this embodiment and is shown in Fig. 3c. In Fig. 3c, the appearance of a pixel $\mathbf{x}$ in the first digital image has been superimposed on the appearance of its image $\mathbf{T(x)}$ in the second image. Fig. 3 also shows the system of rectangles that was used in this example. Regions of overlap of spots in the two images appear in Figs. 3c and 3d by vertical hatching superimposed on horizontal hatching. The amount of overlaps is substantially greater in Fig. 3c compared to 3d.

In the method claims that follow, alphabetic characters used to designate claim steps are provided for convenience only and do not imply any particular order of performing the steps.

**References**

Adelson, E. *et al*. RCA Engineer 29, No.6, Nov/Dec 1984, pp 33-41.

Aggarwal J. K.. and Nandhakumar N., "*On the computation of motion from sequences of images - A review*", Proceedings of the IEEE, 76(8), pp. 917-935, 1988.

Baker T.J., "*Three dimensional mesh generation by triangulation of arbitrary point sets"* AIAA 8th Computational Fluid Dynamics Conference 1987.

de Boor, C., "*A Practical Guide to Splines*", Springer-Verlag, New-York, NY, 1978.

Girosi, F., Jones, M. and Poggio, T., "*Regularization Theory and Neural Networks Architectures*", Neural Computation, Vol. 7, 219--269, 1995.

Gonzalez. R.C.and Woods, R.E., *Digital Image Processing,* Addison-Wesley, 1992.

Gonzalez, R.C. and Wintz, P.A., "*Digital Image Processing*", Reading, MA., Addison-Wesley 1977.

Huang, T.S., and Netravali, A.N., *"Motion and Structure from Feature Correspondences: A Review*", Proceedings of the IEEE, 82(2), pp. 252-268, 1994.

Kanaganathan S., and Goldstein N.B., "*Comparison of four point adding algorithms for Delaunay type three dimensional mesh generators",* IEEE Transactions on magnetics, Vol 27, No 3, May 1991.

Poggio T. and Girosi, F, "*A Theory of Networks for Approximation and Learning*", AI memo 1140, July 1989.

Poggio, T. and Girosi, F., "*Networks for Approximation and Learning*", Proceedings of the IEEE, vol. 78, no. 9, pp. 1481-1497, September 1990.

Press W.H., Flannery B.P., Teukolsky S.A., and Vetterling W.T., *"Numerical Recipes In C (Second Edition) ",* Cambridge University Press, Cambridge, 1992.

Pratt, W.K., "*Digital Image Processing (Second Edition)*", New York, Wiley 1991.

Singh, A., Goldgof, D., and Teraopoulos, D., *"Deformable Models in Medical Image Analysis*", IEEE Computer Society, 1998.

**Claims**

1.  A method for registering first and second digital images of first and second separation patterns, respectively, the digital images being described by gray level functions $f_1$ and $f_2$, respectively, defined on a pixel set, the method comprising the steps of:

    **a** dividing at least a portion of the pixel set into m regions $R_1,...,R_k,...R_m$, the m regions each having an appearance in the first image;
    **b** For each region $R_k$,

    > **ba** selecting a finite sequence of $n_k$ transformations $S_{k,1},...,S_{k,j},...S_{k,nk}$, each transformation mapping $R_k$ into the pixel set of the second image;
    > **bb** generating $n_k$ regions $\mathbf{S}_{k,j}(\mathbf{R}_k)$ for j=1,...$n_k$ in the pixel set, the $n_k$ regions each having an appearance in the second digital image;
    > **bc** calculating a similarity score for each of the $n_k$ regions $\mathbf{S}_{k,j}(R_k)$ for j=1,...$n_k$, the similarity score scoring the similarity of the appearance of $R_k$ in the first digital image and the appearance $\mathbf{S}_{k,j}(\mathbf{R}_k)$ in the second digital image;
    > **bd** selecting a transformation $\mathbf{S}_k$ from among the $n_k$ transformations $S_{k,1},...,S_{k,j},...S_{k,nk}$ for which the similarity score of $\mathbf{S}_k(\mathbf{R}_k)$ is maximal among the similarity scores of the $\mathbf{S}_{k,j}(R_k)$ for j=1,...$n_k$; and
    > **be** electing a pixel $\mathbf{p}_k$ in $R_k$;

    **c** defining a global transformation **T** mapping at least a portion of the pixel set into the pixel set of the second image based upon at least some of the $\mathbf{S}_k(\mathbf{p}_k)$, the transformation **T** having an inverse $\mathbf{T}^{-1}$, the second digital image having an image under $\mathbf{T}^{-1}$; and
    **d** obtaining the image of the second image under $\mathbf{T}^{-1}$, to produce a modified second image to be used for registration with the first image, **characterized in that** the similarity score is obtained in a process involving comparing the value of $f_1$, at a pixel **x** in the region $R_k$ to a value of $f_1$ at a pixel neighboring **x**, and further involving comparing the value of $f_2$ at the pixel $S_{k,j}(\mathbf{x})$ to the value of $f_2$ at a pixel neighboring $S_{k,j}(\mathbf{x})$.

2.  The method of Claim 1 wherein the first and second separation patterns are one-dimensional separation patterns.

3.  The method of Claim 1 wherein the first and second separation patterns are two-dimensional separation patterns.

4.  The method of any one of the previous claims wherein the first and second separation patterns are obtained using a separation technique selected from the list comprising:

    (a) Electrophoresis;
    (b) paper chromatography;
    (c) thin-layer chromatography;
    (d) high pressure liquid chromatography; and
    (e) mass spectroscopy.

5.  The method of any one of the previous claims wherein the number of regions, m, is equal to one.

6. The method of any one of the previous claims wherein one or more of the regions $R_k$ contain exactly one pixel.

7. The method of any one of the previous claims wherein one or more of the regions $R_k$ are rectangles.

8. The method of any one of the previous claims wherein the regions $R_k$ are rectangles that are regularly arranged in the first image.

9. The method of any one of the previous claims wherein the step of dividing at least a portion of the pixel set into m regions $R_k$ for k=1 to k=m comprises the steps of designating a scoring function, the scoring function scoring regions in the pixel set and selecting regions $R_k$ for k=1 to m, where each region has a score greater than a predetermined value.

10. The method of Claim 9 wherein the scoring function comprises the algorithmic expression s=a[n]˙c, wherein n is the number of spots in a region, c is the average contrast of the spots and $a[n]$ is a function of the number of spots in the region.

11. The method of Claim 10 wherein a[n] has a maximum at n about equal to 3.

12. The method of any one of the previous claims wherein one or more of the transformations $\mathbf{S}_{k,j}$ are of a type selected from the list comprising:

   (a) translations;
   (b) linear transformations; and
   (c) affine transformations.

13. The method according to any one of the previous claims wherein the similarity score is obtained in a process involving a gradient of $f_1$ at a pixel $\mathbf{x}$ in $R_k$ and a gradient of $f_2$ at the pixel $S_{k,j}(\mathbf{x})$.

14. The method according to any one of the previous claims wherein the similarity score is obtained in a process involving determining a background contrast image of the first image and a background contrast image of the second image.

15. The method of Claim 13 wherein the similarity score scoring the similarity of the appearance of $R_k$ in the first image and the appearance of $\mathbf{S}_{k,j}(\mathbf{R}_k)$ in the second image is given by the arithmetic expression $\Sigma\ psf(\mathbf{x}, \mathbf{S}_{k,j}(\mathbf{x}))$, wherein the sum is taken over all $\mathbf{x}$ in $R_k$, and

$$Psf(x,y) = 1 + \alpha\ \min(B_1(x), B_2(y) + \beta\langle\nabla(f_1(x)), \nabla(f_2(y))\rangle^{1/2}$$

for any two pixels $\mathbf{x}$ and $\mathbf{y}$, wherein $B_1$ and $B_2$ are background contrast images of the first and second digital images, respectively, and $\alpha$ and $\beta$ are two predetermined constants.

16. The method of any one of the previous claims wherein the global transformation is a spline.

17. The method of any one of Claims 1 to 16 wherein the global transformation in a Delaunay triangulation transformation.

18. A program storage device readable by machine tangibly embodying a program of instructions executable by the machine to perform method steps for registering first and second digital images of first and second separation patterns, respectively, the digital images being described by gray level functions $f_1$ and $f_2$, respectively, defined on a pixel set, the registering comprising the steps of:

   a dividing at least a portion of the pixel set into m regions $R_1,...,R_k,...R_m$, the m regions each having an appearance in the first image;
   b For each region $R_k$,

      ba selecting a finite sequence of $n_k$ transformations $S_{k,1},...,S_{k,j}...S_{k,nk}$, each transformation mapping $\mathbf{R}_k$ into the pixel set of the second image;

**bb** generating $n_k$ regions $\mathbf{S}_{k,j}(\mathbf{R}_k)$ for j=1,...$n_k$ in the pixel set, the $n_k$ regions each having an appearance in the second image;

**bc** calculating a similarity score for each of the $n_k$ regions $\mathbf{S}_{k,j}(\mathbf{R}_k)$ for j=1,...$n_k$, the similarity score scoring the similarity of the appearance of $R_k$ in the first image and the appearance $\mathbf{S}_{k,j}(R_k)$ in the second image;

**bd** selecting a transformation $\mathbf{S}_k$ from among the $n_k$ transformations $S_{k,1},...,S_{k,j},...S_{k,nk}$ for which the similarity score of $\mathbf{S}_k(R_k)$ is maximal among the similarity scores of the $\mathbf{S}_{k,j}(R_k)$ for j=1,...$n_k$;

**be** selecting a pixel $\mathbf{p}_k$ in $R_k$;

**c** defining a global transformation $\mathbf{T}$ mapping at least a portion of the pixel set into the pixel set of the second image based upon at least some of the $\mathbf{S}_k(\mathbf{p}_k)$, the transformation T having an inverse $\mathbf{T}^{-1}$, the second image having an image under $\mathbf{T}^{-1}$; and

**d** obtaining the image of the second image under $\mathbf{T}^{-1}$, to produce a modified second image to be used for registration with the first image,

**characterized in that** the similarity score is obtained in a process involving comparing the value of $f_1$, at a pixel **x** in the region $R_k$ to a value of $f_1$ at a pixel. neighboring **x**, and further involving comparing the value of $f_2$ at the pixel $S_{k,j}(\mathbf{x})$ to the value of $f_2$ at a pixel neighboring $S_{k,j}(\mathbf{x})$.

19. The program storage device of Claim 18 wherein the first and second separation patterns are one-dimensional separation patterns.

20. The program storage device of Claim 18 wherein the first and second separation patterns are two-dimensional separation patterns.

21. The program storage device of any one of the previous claims wherein the first and second separation patterns are obtained using a separation technique selected from the list comprising:

   (a) electrophoresis;
   (b) paper chromatography;
   (c) thin-layer chromatography;
   (d) high pressure liquid chromatography; and
   (e) mass spectroscopy.

22. The program storage device of any one of claims 18 to 21 wherein the number of regions, m, is equal to one.

23. The program storage medium of any one of claims 18 to 22 wherein one or more of the regions $R_k$ contain exactly one pixel.

24. The storage medium of any one of claims 18 to 23 wherein one or more of the regions $R_k$ are rectangles.

25. The program storage device of any one of claims 18 to 24 wherein the regions $R_k$ are rectangles that are regularly arranged in the first image.

26. The program storage device of any one of claims 18 to 25 wherein the step of dividing at least a portion of the pixel set into m regions $R_k$ for k=1 to k=m comprises the steps of designating a scoring function scoring regions in the pixel set and selecting regions $R_k$ for k=1 to m, where each region has a score greater than a predetermined value.

27. The program storage device of Claim 26 wherein the scoring function comprises the algorithmic expression s=$a$[n]˙c, wherein n is the number of spots in a region, c is the average contrast of the spots and $a$[n] is a function of the number of spots in the region.

28. The program storage device of Claim 27 wherein $a$[n] has a maximum at n approximately equal to 3.

29. The program storage device of any one of Claims 18 to 28 wherein one or more of the transformations $\mathbf{S}_{k,j}$ are of a type selected from the list comprising:

   (a) translations;

EP 1 238 366 B1

(b) linear transformations; and
(c) affine transformations.

30. The program storage device according to any one of claims 18 to 29 wherein the similarity score is obtained in a process involving a gradient of $f_1$ at a pixel $\mathbf{x}$ in $R_k$ and a gradient of $f_2$ at the pixel $S_{k,j}(\mathbf{x})$.

31. The program storage device according to any one of claims 18 to 30, wherein the similarity score is obtained in a process involving determining a background contrast image of the first image and a background contrast image of the second image.

32. The program storage device of any one of Claims 30 or 31 wherein the similarity score scoring the similarity of the appearance of $R_k$ in the first image and the appearance of $\mathbf{S}_{k,j}(\mathbf{R}_k)$ in the second image is given by the arithmetic expression $\Sigma\, psf(\mathbf{x}, \mathbf{S}_{k,j}(\mathbf{x}))$, wherein the sum is taken over all $\mathbf{x}$ in $R_k$, and

$$Psf(x,y) = 1 + \alpha \min(B_1(x), B_2(y) + \beta \langle \nabla(f_1(x)), \nabla(f_2(y)) \rangle^{1/2}$$

for any two pixels $\mathbf{x}$ and $\mathbf{y}$ in the pixel set, wherein $B_1$ and $B_2$ are background contrast images of the first and second digital images, respectively, and $\alpha$ and $\beta$ are predetermined constants.

33. The program storage device of any one of Claims 18 to 32 wherein the global transformation is a spline.

34. The program storage device of any one of Claims 18 to 32 wherein the global transformation is a Delaunay triangulation transformation.

35. A computer program product having computer readable program code embodied therein for registering first and second digital images of first and second separation patterns, respectively, the digital images being described by gray level functions $f_1$ and $f_2$, respectively, defined on a pixel set, the registering comprising the steps of:

   **a** dividing at least a portion of the pixel set into m regions $R_1,...,R_k,...R_m$, the m regions each having an appearance in the first image;
   **b** for each region $R_k$,

   **ba** selecting a finite sequence of $n_k$ transformations $S_{k,1},...,S_{k,j}...S_{k,nk}$, each transformation mapping $R_k$ into the pixel set of the second image;
   **bb** generating $n_k$ regions $\mathbf{S}_{k,j}(R_k)$ for j=1,...$n_k$ in the second digital image, $n_k$ regions each having an appearance in the second image;
   **bc** calculating a similarity score for each of the $n_k$ regions $\mathbf{S}_{k,j}(R_k)$ for j=1,...$n_k$, the similarity score scoring the similarity of the appearance of $R_k$ in the first image and the appearance of $\mathbf{S}_{k,j}(R_k)$ in the second image;
   **bd** selecting a transformation $\mathbf{S}_k$ from among the $n_k$ transformations $S_{k,1},...,S_{k,j}...S_{k,nk}$ for which the similarity score of $\mathbf{S}_k(\mathbf{R}_k)$ is maximal among the similarity scores of the -$\mathbf{S}_{k,j}(R_k)$ for j=1,...$n_k$;

   **c** defining a global transformation $\mathbf{T}$ mapping at least a portion of the pixels in the pixel set into the pixel set of the second image based upon at least some of the $\mathbf{S}_k(\mathbf{p}_k)$, the transformation $\mathbf{T}$ having an inverse, the second digital image having an image under $\mathbf{T}^{-1}$; and
   **d** obtaining the image of the second image under $\mathbf{T}^{-1}$, to produce a modified second image to be used for registration with the first image,

   **characterized in that** the similarity score is obtained in a process involving comparing the value of $f_1$, at a pixel $\mathbf{x}$ in the region $R_k$ to a value of $f_1$ at a pixel neighboring $\mathbf{x}$, and further involving comparing the value of $f_2$ at the pixel $S_{k,j}(x)$ to the value of $f_2$ at a pixel neighboring $S_{k,j}(\mathbf{x})$.

36. A method for registering a sequence of n digital images $I_1,...I_n$ of n separation patterns, respectively, the digital images being described by gray level functions defined on a pixel set, the method comprising the steps of:

   **a** registering the digital images $I_1$ and $I_2$ according to any one of Claims 1 to 17; to produce an image $I'_2$ that is the modified image of $I_2$;
   **b** registering $I'_k$ and $I_{k+1}$, for all k from 2 to n-1 according to any one of Claims 1 to 17 to produce an image

$I'_{k+1}$, where $I'_k$ and $I'_{k+1}$ are the modified images of $I_k$ and $I_{k+1}$, respectively.

37. A method for registering a sequence of n digital images $I_1,...I_n$ of n separation patterns, respectively, the digital images being described by gray level functions defined on a pixel set, the method comprising registering a master pattern and the image $I_k$ according to any one of Claims 1 to 17 so as to produce an image $I'_k$, where $I'_k$ is the modified image of $I_k$, for all k from 1 to n.

38. A method for displaying a sequence of n digital images $I_1,...I_n$ of n separation patterns, respectively, the digital images being described by gray level functions defined on a pixel set, the method comprising:

   **a** registering the sequence of images according to Claim 36, so as to
   produce a second sequence of images $I'_1, I'_2...I'_n$, where $I'_1$ is the image $I_1$ and $I'_k$ is the modified image of $I_k$, for k from 2 to n; and
   **b** displaying the second sequence of images $I'_1,...I'_n$ sequentially on a display.

39. A method for displaying a sequence of n digital images $I_1,...I_n$ of n separation patterns, respectively, the digital images being described by gray level functions defined on a pixel set, the method comprising:

   **a** registering the sequence of images according to Claim 37 so as to produce a second sequence of images $I'_1, I'_2,...I'_n$, where $I'_k$ is the modified image of $I_k$; and
   **b** displaying the second sequence of images $I'_1,...I'_n$ sequentially on a display.

40. A program storage device readable by machine, tangibly embodying a program of instructions executable by the machine to perform method steps for registering a sequence of n digital images $I_1,...I_n$ of n separation patterns, respectively, the digital images being described by gray level functions defined on a pixel set, the method comprising the steps of:

   **a** registering the digital images 1, and $I_2$ according to any one of Claims 1 to 17; to produce an image $I'_2$ that is the modified image of $I_2$;
   **b** registering $I'_k$ and $I_{k+1}$, for all k from 2 to n-1 according to any one of Claims 1 to 17 to produce an image $I'_{k+1}$, where $I'_k$ and $I'_{k+1}$ are the modified images of $I_k$ and $I_{k+1}$, respectively.

41. A computer program product comprising a computer useable medium having computer readable program code embodied therein for registering a sequence of n digital images $I_1,...I_n$ of n separation patterns, respectively, the digital images being described by gray level functions defined on a pixel set, the computer program product comprising:

   **a** computer readable program code for causing the computer to register the digital images $I_1$ and $I_2$ according to any one of Claims 1 to 17; to produce an image $I'_2$ that is the modified image of $I_2$;
   b computer readable program code for causing the computer to register $I'_k$ and $I_{k+1}$, for all k from 2 to n-1 according to any one of Claims 1 to 17 to produce an image $I'_{k+1}$, where $I'_k$ and $I'_{k+1}$ are the modified images of $I_k$ and $I_{k+1}$, respectively.

42. A program storage device readable by machine, tangibly embodying a program of instructions executable by the machine to perform method steps for registering a sequence of n digital images $I_1,...I_n$ of n separation patterns, respectively, the digital images being described by gray level functions defined on a pixel set, the method comprising registering a master pattern and the image $I_k$ according to any one of Claims 1 to 17 so as to produce an image $I'_k$, where $I'_k$ is the modified image of $I_k$, for all k from 1 to n.

43. A program storage device readable by machine, tangibly embodying a program of instructions executable by the machine to perform method steps for displaying a sequence of n digital images $I_1,...I_n$ of n separation patterns, respectively, the digital images being described by gray level functions defined on a pixel set, the method comprising:

   **a** registering the sequence of images according to Claim 36, so as to produce a second sequence of images $I'_1, I'_2...I'_n$, where $I'_1$ is the image $I_1$ and $I'_k$ is the modified image of $I_k$, for k from 2 to n; and
   **b** displaying the second sequence of images $I'_1,...I'_n$ sequentially on a display.

**44.** A computer program product comprising a computer useable medium having computer readable program code embodied therein for displaying a sequence of n digital images $I_1,...I_n$ of n separation patterns, respectively, the digital images being described by gray level functions defined on a pixel set, the computer program product comprising:

**a** computer readable program code for causing the computer to register the sequence of images according to Claim 36, so as to produce a second sequence of images $I'_1, I'_2...I'_n$, where $I'_1$ is the image $I_1$ and $I'_k$ is the modified image of $I_k$, for k from 2 to n; and

**b** computer readable program code for causing the computer to display the second sequence of images $I'_1,...I'_n$ sequentially on a display.

**45.** A program storage device readable by machine, tangibly embodying a program of instructions executable by the machine to perform method steps for displaying a sequence of n digital images $I_1,...I_n$ of n separation patterns, respectively, the digital images being described by gray level functions defined on a pixel set, the method comprising:

**a** registering the sequence of images according to Claim 37 so as to produce a second sequence of images $I'_1, I'_2,...I'_n$, where $I'_k$ is the modified image of $I_k$; and

**b** displaying the second sequence of images $I'_1,...I'_n$ sequentially on a display.

**46.** A computer program product comprising a computer useable medium having computer readable program code embodied therein for displaying a sequence of n digital images $I_1,...I_n$ of n separation patterns, respectively, the digital images being described by gray level functions defined on a pixel set, the computer program product comprising:

a computer readable program code for causing the computer to registering the sequence of images according to Claim 37 so as to produce a second sequence of images $I'_1, I'_2,...I'_n$, where $I'_k$ is the modified image of $I_k$; and

**b** computer readable program code for causing the computer to displaying the second sequence of images $I'_1,...I'_n$ sequentially on a display.

**Patentansprüche**

**1.** Verfahren zum Überdecken eines ersten und zweiten digitalen Bilds eines ersten bzw. zweiten Trennmusters, wobei die digitalen Bilder durch Grauwertfunktionen $f_1$ bzw. $f_2$ beschrieben sind, die an einer Pixelmenge definiert sind, wobei das Verfahren die folgenden Schritte aufweist:

a Aufteilen mindestens eines Anteils der Pixelmenge in m Bereiche $R_1, ..., R_k, ... R_m$, wobei die m Bereiche jeweils ein Aussehen im ersten Bild haben;

b für jeden Bereich $R_k$ erfolgendes

ba Auswählen einer endlichen Folge von $n_k$ Transformationen $S_{k,1}, ..., S_{k,j}, ... S_{k,nk}$, wobei jede Transformation $R_k$ in die Pixelmenge des zweiten Bilds abbildet;

bb Erzeugen von $n_k$ Bereichen $S_{k,j}(R_k)$ für $j = 1, ... n_k$ in der Pixelmenge, wobei die $n_k$ Bereiche jeweils ein Aussehen im zweiten digitalen Bild haben;

bc Berechnen einer Ähnlichkeitsbewertung für jeden der $n_k$ Bereiche $S_{k,j}(R_k)$ für $j = 1, ... n_k$, wobei die Ähnlichkeitsbewertung die Ähnlichkeit des Aussehens von $R_k$ im ersten digitalen Bild und des Aussehens $S_{k,j}(R_k)$ im zweiten digitalen Bild bewertet;

bd Auswählen einer Transformation $S_k$ unter den $n_k$ Transformationen $S_{k,1}, ..., S_{k,j}, ... S_{k,nk}$, für die die Ähnlichkeitsbewertung von $S_k(R_k)$ unter den Ähnlichkeitsbewertungen der $S_{k,j}(R_k)$ für $j = 1, ... n_k$ maximal ist; und

be Auswählen eines Pixels $p_k$ in $R_k$;

c Definieren einer globalen Transformation T, die mindestens einen Anteil der Pixelmenge in die Pixelmenge des zweiten Bilds auf der Grundlage mindestens einiger der $S_k(p_k)$ abbildet, wobei die Transformation T eine Umkehrung $T^{-1}$ hat, wobei das zweite digitale Bild ein Bild unter $T^{-1}$ hat; und

d Erhalten des Bilds des zweiten Bilds unter $T^{-1}$, um ein modifiziertes zweites Bild zu erzeugen, das zur Überdeckung mit dem ersten Bild zu verwenden ist,

**dadurch gekennzeichnet, daß** die Ähnlichkeitsbewertung in einem Verfahren erhalten wird, zu dem das Vergleichen des Werts von $f_1$ an einem Pixel x im Bereich $R_k$ mit einem Wert von $f_1$ an einem zu x benachbarten Pixel gehört und zu dem ferner das Vergleichen des Werts von $f_2$ am Pixel $S_{k,j}(x)$ mit dem Wert von $f_2$ an einem zu $S_{k,j}(x)$ benachbarten Pixel gehört.

2. Verfahren nach Anspruch 1, wobei das erste und zweite Trennmuster eindimensionale Trennmuster sind.

3. Verfahren nach Anspruch 1, wobei das erste und zweite Trennmuster zweidimensionale Trennmuster sind.

4. Verfahren nach einem der vorstehenden Ansprüche, wobei das erste und zweite Trennmuster unter Verwendung einer Trenntechnik erhalten werden, die aus der Liste ausgewählt ist, die aufweist:

    (a) Elektrophorese;
    (b) Papierchromatographie;
    (c) Dünnschichtchromatographie;
    (d) Hochdruckflüssigkeitschromatographie; und
    (e) Massenspektroskopie.

5. Verfahren nach einem der vorstehenden Ansprüche, wobei die Anzahl m der Bereiche gleich eins ist.

6. Verfahren nach einem der vorstehenden Ansprüche, wobei einer oder mehrere der Bereiche $R_k$ genau ein Pixel enthalten.

7. Verfahren nach einem der vorstehenden Ansprüche, wobei einer oder mehrere der Bereiche $R_k$ Rechtecke sind.

8. Verfahren nach einem der vorstehenden Ansprüche, wobei die Bereiche $R_k$ Rechtecke sind, die im ersten Bild regelmäßig angeordnet sind.

9. Verfahren nach einem der vorstehenden Ansprüche, wobei der Schritt des Aufteilens mindestens eines Anteils der Pixelmenge in m Bereiche $R_k$ für k = 1 bis k = m die folgenden Schritte aufweist: Festlegen einer Bewertungsfunktion, wobei die Bewertungsfunktion Bereiche in der Pixelmenge bewertet, und Auswählen von Bereichen $R_k$ für k = 1 bis m, wobei jeder Bereich eine Bewertung hat, die größer als ein vorbestimmter Wert ist.

10. Verfahren nach Anspruch 9, wobei die Bewertungsfunktion den algorithmischen Ausdruck s = a[n]c aufweist, wobei n die Anzahl von Punkten in einem Bereich ist, c der mittlere Kontrast der Punkte ist und a[n] eine Funktion der Anzahl von Punkten im Bereich ist.

11. Verfahren nach Anspruch 10, wobei a[n] ein Maximum bei n hat, das etwa gleich 3 ist.

12. Verfahren nach einem der vorstehenden Ansprüche, wobei eine oder mehrere der Transformationen $S_{k,j}$ von einer Art sind, die aus der Liste ausgewählt ist, die aufweist:

    (a) Translationen;
    (b) lineare Transformationen; und
    (c) affine Transformationen.

13. Verfahren nach einem der vorstehenden Ansprüche, wobei die Ähnlichkeitsbewertung in einem Verfahren erhalten wird, zu dem ein Gradient von $f_1$ an einem Pixel x in $R_k$ und ein Gradient von $f_2$ am Pixel $S_{k,j}(x)$ gehören.

14. Verfahren nach einem der vorstehenden Ansprüche, wobei die Ähnlichkeitsbewertung in einem Verfahren erhalten wird, zu dem das Bestimmen eines Hintergrundkontrastbilds des ersten Bilds und eines Hintergrundkontrastbilds des zweiten Bilds gehört.

15. Verfahren nach Anspruch 13, wobei die Ähnlichkeitsbewertung, die die Ähnlichkeit des Aussehens von $R_k$ im ersten Bild und des Aussehens von $S_{k,j}(R_k)$ im zweiten Bild bewertet, durch den arithmetischen Ausdruck $\Sigma$ psf(x, $S_{k,j}(x)\rangle$ gegeben ist, wobei die Summe über alle x in $R_k$ ermittelt wird und

$$Psf(x, y) = 1 + \alpha \min(B_1(x), B_2(y)) +$$

$$\beta \langle \nabla(f_1(x)), \nabla(f_2(y)) \rangle^{1/2}$$

für beliebige zwei Pixel x und y ist, wobei $B_1$ und $B_2$ Hintergrundkontrastbilder des ersten bzw. zweiten digitalen Bilds sind und $\alpha$ und $\beta$ zwei vorbestimmte Konstanten sind.

16. Verfahren nach einem der vorstehenden Ansprüche, wobei die globale Transformation ein Spline ist.

17. Verfahren nach einem der Ansprüche 1 bis 16, wobei die globale Transformation eine Delaunay-Triangulationstransformation ist.

18. Maschinenlesbare Programmspeichervorrichtung, die ein Programm von Befehlen faßbar verkörpert, die durch die Maschine ausführbar sind, um Verfahrensschritte zum Überdecken eines ersten und zweiten digitalen Bilds eines ersten bzw. zweiten Trennmusters durchzuführen, wobei die digitalen Bilder durch Grauwertfunktionen $f_1$ bzw. $f_2$ beschrieben sind, die an einer Pixelmenge definiert sind, wobei das Überdecken die folgenden Schritte aufweist:

a Aufteilen mindestens eines Anteils der Pixelmenge in m Bereiche $R_1$, ..., $R_k$, ... $R_m$, wobei die m Bereiche jeweils ein Aussehen im ersten Bild haben;
b für jeden Bereich $R_k$ erfolgendes

ba Auswählen einer endlichen Folge von $n_k$ Transformationen $S_{k,1}$, ..., $S_{k,j}$, ... $S_{k,nk}$, wobei jede Transformation $R_k$ in die Pixelmenge des zweiten Bilds abbildet;
bb Erzeugen von $n_k$ Bereichen $S_{k,j}(R_k)$ für j = 1, ... $n_k$ in der Pixelmenge, wobei die $n_k$ Bereiche jeweils ein Aussehen im zweiten Bild haben;
bc Berechnen einer Ähnlichkeitsbewertung für jeden der $n_k$ Bereiche $S_{k,j}(R_k)$ für j = 1, ... $n_k$, wobei die Ähnlichkeitsbewertung die Ähnlichkeit des Aussehens von $R_k$ im ersten Bild und des Aussehens $S_{k,j}(R_k)$ im zweiten Bild bewertet;
bd Auswählen einer Transformation $S_k$ unter den $n_k$ Transformationen $S_{k,1}$, ..., $S_{k,j}$, ... $S_{k,nk}$, für die die Ähnlichkeitsbewertung von $S_k(R_k)$ unter den Ähnlichkeitsbewertungen der $S_{k,j}(R_k)$ für j = 1, ... $n_k$ maximal ist;
be Auswählen eines Pixels $p_k$ in $R_k$;

c Definieren einer globalen Transformation T, die mindestens einen Anteil der Pixelmenge in die Pixelmenge des zweiten Bilds auf der Grundlage mindestens einiger der $S_k(p_k)$ abbildet, wobei die Transformation T eine Umkehrung $T^{-1}$ hat, wobei das zweite Bild ein Bild unter $T^{-1}$ hat; und
d Erhalten des Bilds des zweiten Bilds unter $T^{-1}$, um ein modifiziertes zweites Bild zu erzeugen, das zur Überdeckung mit dem ersten Bild zu verwenden ist,

**dadurch gekennzeichnet, daß** die Ähnlichkeitsbewertung in einem Verfahren erhalten wird, zu dem das Vergleichen des Werts von $f_1$ an einem Pixel x im Bereich $R_k$ mit einem Wert von $f_1$ an einem zu x benachbarten Pixel gehört und zu dem ferner das Vergleichen des Werts von $f_2$ am Pixel $S_{k,j}(x)$ mit dem Wert von $f_2$ an einem zu $S_{k,j}(x)$ benachbarten Pixel gehört.

19. Programmspeichervorrichtung nach Anspruch 18, wobei das erste und zweite Trennmuster eindimensionale Trennmuster sind.

20. Programmspeichervorrichtung nach Anspruch 18, wobei das erste und zweite Trennmuster zweidimensionale Trennmuster sind.

21. Programmspeichervorrichtung nach einem der vorstehenden Ansprüche, wobei das erste und zweite Trennmuster unter Verwendung einer Trenntechnik erhalten werden, die aus der Liste ausgewählt ist, die aufweist:

(a) Elektrophorese;
(b) Papierchromatographie;
(c) Dünnschichtchromatographie;

(d) Hochdruckflüssigkeitschromatographie; und

(e) Massenspektroskopie.

**22.** Programmspeichervorrichtung nach einem der Ansprüche 18 bis 21, wobei die Anzahl m der Bereiche gleich eins ist.

**23.** Programmspeichermedium nach einem der Ansprüche 18 bis 22, wobei einer oder mehrere der Bereiche $R_k$ genau ein Pixel enthalten.

**24.** Speichermedium nach einem der Ansprüche 18 bis 23, wobei einer oder mehrere der Bereiche $R_k$ Rechtecke sind.

**25.** Programmspeichervorrichtung nach einem der Ansprüche 18 bis 24, wobei die Bereiche $R_k$ Rechtecke sind, die im ersten Bild regelmäßig angeordnet sind.

**26.** Programmspeichervorrichtung nach einem der Ansprüche 18 bis 25, wobei der Schritt des Aufteilens mindestens eines Anteils der Pixelmenge in m Bereiche $R_k$ für k = 1 bis k = m die folgenden Schritte aufweist: Festlegen einer Bewertungsfunktion, die Bereiche in der Pixelmenge bewertet, und Auswählen von Bereichen $R_k$ für k = 1 bis m, wobei jeder Bereich eine Bewertung hat, die größer als ein vorbestimmter Wert ist.

**27.** Programmspeichervorrichtung nach Anspruch 26, wobei die Bewertungsfunktion den algorithmischen Ausdruck s = a[n]c aufweist, wobei n die Anzahl von Punkten in einem Bereich ist, c der mittlere Kontrast der Punkte ist und a[n] eine Funktion der Anzahl von Punkten im Bereich ist.

**28.** Programmspeichervorrichtung nach Anspruch 27, wobei a[n] ein Maximum bei n hat, das etwa gleich 3 ist.

**29.** Programmspeichervorrichtung nach einem der Ansprüche 18 bis 28, wobei eine oder mehrere der Transformationen $S_{k,j}$ von einer Art sind, die aus der Liste ausgewählt ist, die aufweist:

(a) Translationen;

(b) lineare Transformationen; und

(c) affine Transformationen.

**30.** Programmspeichervorrichtung nach einem der Ansprüche 18 bis 29, wobei die Ähnlichkeitsbewertung in einem Verfahren erhalten wird, zu dem ein Gradient von $f_1$ an einem Pixel x in $R_k$ und ein Gradient von $f_2$ am Pixel $S_{k,j}$ (x) gehören.

**31.** Programmspeichervorrichtung nach einem der Ansprüche 18 bis 30, wobei die Ähnlichkeitsbewertung in einem Verfahren erhalten wird, zu dem das Bestimmen eines Hintergrundkontrastbilds des ersten Bilds und eines Hintergrundkontrastbilds des zweiten Bilds gehört.

**32.** Programmspeichervorrichtung nach einem der Ansprüche 30 oder 31, wobei die Ähnlichkeitsbewertung, die die Ähnlichkeit des Aussehens von $R_k$ im ersten Bild und des Aussehens von $S_{k,j}(R_k)$ im zweiten Bild bewertet, durch den arithmetischen Ausdruck $\Sigma$ psf(x, $S_{k,j}$(x)) gegeben ist, wobei die Summe über alle x in $R_k$ ermittelt wird und

$$\text{Psf} (x, y) = 1 + \alpha \min(B_1(x), B_2(y) + \beta \langle \nabla(f_1(x)),$$

$$\nabla(f_2(y))\rangle^{1/2}$$

für beliebige zwei Pixel x und y in der Pixelmenge ist, wobei $B_1$ und $B_2$ Hintergrundkontrastbilder des ersten bzw. zweiten digitalen Bilds sind und $\alpha$ und $\beta$ vorbestimmte Konstanten sind.

**33.** Programmspeichervorrichtung nach einem der Ansprüche 18 bis 32, wobei die globale Transformation ein Spline ist.

**34.** Programmspeichervorrichtung nach einem der Ansprüche 18 bis 32, wobei die globale Transformation eine Delaunay-Triangulationstransformation ist.

**35.** Computerprogrammprodukt mit darin verkörpertem computerlesbarem Programmcode zum Überdecken eines ersten und zweiten digitalen Bilds eines ersten bzw. zweiten Trennmusters, wobei die digitalen Bilder durch Grauwertfunktionen $f_1$ bzw. $f_2$ beschrieben sind, die an einer Pixelmenge definiert sind, wobei das Überdecken die folgenden Schritte aufweist:

a Aufteilen mindestens eines Anteils der Pixelmenge in m Bereiche $R_1$, ..., $R_k$, ... $R_m$, wobei die m Bereiche jeweils ein Aussehen im ersten Bild haben;
b für jeden Bereich $R_k$ erfolgendes

ba Auswählen einer endlichen Folge von $n_k$ Transformationen $S_{k,1}$, ..., $S_{k,j}$, ... $S_{k,nk}$, wobei jede Transformation $R_k$ in die Pixelmenge des zweiten Bilds abbildet;
bb Erzeugen von $n_k$ Bereichen $S_{k,j}(R_k)$ für j = 1, ... $n_k$ im zweiten digitalen Bild, wobei $n_k$ Bereiche jeweils ein Aussehen im zweiten Bild haben;
bc Berechnen einer Ähnlichkeitsbewertung für jeden der $n_k$ Bereiche $S_{k,j}(R_k)$ für j = 1, ... $n_k$, wobei die Ähnlichkeitsbewertung die Ähnlichkeit des Aussehens von $R_k$ im ersten Bild und des Aussehens von $S_{k,j}(R_k)$ im zweiten Bild bewertet;
bd Auswählen einer Transformation $S_k$ unter den $n_k$ Transformationen $S_{k,1}$, ..., $S_{k,j}$, ... $S_{k,nk}$, für die die Ähnlichkeitsbewertung von $S_k(R_k)$ unter den Ähnlichkeitsbewertungen der $S_{k,j}(R_k)$ für j = 1, ... $n_k$ maximal ist; = 1, ... $n_k$ maximal ist;

c Definieren einer globalen Transformation T, die mindestens einen Anteil der Pixel in der Pixelmenge in die Pixelmenge des zweiten Bilds auf der Grundlage mindestens einiger der $S_k(p_k)$ abbildet, wobei die Transformation T eine Umkehrung hat, wobei das zweite digitale Bild ein Bild unter $T^{-1}$ hat; und
d Erhalten des Bilds des zweiten Bilds unter $T^{-1}$, um ein modifiziertes zweites Bild zu erzeugen, das zur Überdeckung mit dem ersten Bild zu verwenden ist,

**dadurch gekennzeichnet, daß** die Ähnlichkeitsbewertung in einem Verfahren erhalten wird, zu dem das Vergleichen des Werts von $f_1$ an einem Pixel x im Bereich $R_k$ mit einem Wert von $f_1$ an einem zu x benachbarten Pixel gehört und zu dem ferner das Vergleichen des Werts von $f_2$ am Pixel $S_{k,j}(x)$ mit dem Wert von $f_2$ an einem zu $S_{k,j}(x)$ benachbarten Pixel gehört.

**36.** Verfahren zum Überdecken einer Folge von n digitalen Bildern $I_1$, ... $I_n$ von jeweils n Trennmustern, wobei die digitalen Bilder durch Grauwertfunktionen beschrieben sind, die an einer Pixelmenge definiert sind, wobei das Verfahren die folgenden Schritte aufweist:

a Überdecken der digitalen Bilder $I_1$ und $I_2$ nach einem der Ansprüche 1 bis 17, um ein Bild $I'_2$ zu erzeugen; das ein modifiziertes Bild von $I_2$ ist;
b Überdecken von $I'_k$ und $I_{k+1}$ für alle k von 2 bis n-1 nach einem der Ansprüche 1 bis 17, um ein Bild $I'_{k+1}$ zu erzeugen, wobei $I'_k$ und $I'_{k+1}$ die modifizierten Bilder von $I_k$ bzw. $I_{k+1}$ sind.

**37.** Verfahren zum Überdecken einer Folge von n digitalen Bildern $I_1$, ... $I_n$ von jeweils n Trennmustern, wobei die digitalen Bilder durch Grauwertfunktionen beschrieben sind, die an einer Pixelmenge definiert sind, wobei das Verfahren den Schritt des Überdeckens eines Originalmusters und des Bilds $I_k$ nach einem der Ansprüche 1 bis 17 aufweist, um ein Bild $I'_k$ zu erzeugen, wobei $I'_k$ das modifizierte Bild von $I_k$ für alle k von 1 bis n ist.

**38.** Verfahren zum Anzeigen einer Folge von n digitalen Bildern $I_1$, ... $I_n$ von jeweils n Trennmustern, wobei die digitalen Bilder durch Grauwertfunktionen beschrieben sind, die an einer Pixelmenge definiert sind, wobei das Verfahren die folgenden Schritte aufweist:

a Überdecken der Folge von Bildern nach Anspruch 36, um eine zweite Folge von Bildern $I'_1$, $I'_2$ ... $I'_n$ zu erzeugen, wobei $I'_1$ das Bild $I_1$ ist und $I'_k$ das modifizierte Bild von $I_k$ für k von 2 bis n ist; und
b aufeinanderfolgendes Anzeigen der zweiten Folge von Bildern $I'_1$, ... $I'_n$ auf einer Anzeige.

**39.** Verfahren zum Anzeigen einer Folge von n digitalen Bildern $I_1$, ... $I_n$ von jeweils n Trennmustern, wobei die digitalen Bilder durch Grauwertfunktionen beschrieben sind, die an einer Pixelmenge definiert sind, wobei das Verfahren die folgenden Schritte aufweist:

a Überdecken der Folge von Bildern nach Anspruch 37, um eine zweite Folge von Bildern $I'_1$, $I'_2$ ... $I'_n$ zu

erzeugen, wobei I'$_k$ das modifizierte Bild von I$_k$ ist; und
b aufeinanderfolgendes Anzeigen der zweiten Folge von Bildern I'$_1$, ... I'$_n$ auf einer Anzeige.

40. Maschinenlesbare Programmspeichervorrichtung, die ein Programm von Befehlen faßbar verkörpert, die durch die Maschine ausführbar sind, um Verfahrensschritte zum Überdecken einer Folge von n digitalen Bildern I$_1$, ... I$_n$ von jeweils n Trennmustern durchzuführen, wobei die digitalen Bilder durch Grauwertfunktionen beschrieben sind, die an einer Pixelmenge definiert sind, wobei das Verfahren die folgenden Schritte aufweist:

a Überdecken der digitalen Bilder I$_1$ und I$_2$ nach einem der Ansprüche 1 bis 17; um ein Bild I'$_2$ zu erzeugen, das das modifizierte Bild von I$_2$ ist;
b Überdecken von I'$_k$ und I$_{k+1}$ für alle k von 2 bis n-1 nach einem der Ansprüche 1 bis 17, um ein Bild I'$_{k+1}$ zu erzeugen, wobei I'$_k$ und I'$_{k+1}$ die modifizierten Bilder von I$_k$ bzw. I$_{k+1}$ sind.

41. Computerprogrammprodukt mit einem computerverwendbaren Medium mit darin verkörpertem computerlesbarem Programmcode zum Überdecken einer Folge von n digitalen Bildern I$_1$, ... I$_n$ von jeweils n Trennmustern, wobei die digitalen Bilder durch Grauwertfunktionen beschrieben sind, die an einer Pixelmenge definiert sind, wobei das Computerprogrammprodukt aufweist:

a computerlesbaren Programmcode zum Veranlassen, daß der Computer die digitalen Bilder I$_1$ und I$_2$ nach einem der Ansprüche 1 bis 17 überdeckt; um ein Bild I'$_2$ zu erzeugen, das das modifizierte Bild von I$_2$ ist;
b computerlesbaren Programmcode zum Veranlassen, daß der Computer I'$_k$ und I$_{k+1}$ für alle k von 2 bis n-1 nach einem der Ansprüche 1 bis 17 überdeckt, um ein Bild I'$_{k+1}$ zu erzeugen, wobei I'$_k$ und I'$_{k+1}$ die modifizierten Bilder von I$_k$ bzw. I$_{k+1}$ sind.

42. Maschinenlesbare Programmspeichervorrichtung, die ein Programm von Befehlen faßbar verkörpert, die durch die Maschine ausführbar sind, um Verfahrensschritte zum Überdecken einer Folge von n digitalen Bildern I$_1$, ... I$_n$ von jeweils n Trennmustern durchzuführen, wobei die digitalen Bilder durch Grauwertfunktionen beschrieben sind, die an einer Pixelmenge definiert sind, wobei das Verfahren den Schritt des Überdeckens eines Originalmusters und des Bilds I$_k$ nach einem der Ansprüche 1 bis 17 aufweist, um ein Bild I'$_k$ zu erzeugen, wobei I'$_k$ das modifizierte Bild von I$_k$ für alle k von 1 bis n ist.

43. Maschinenlesbare Programmspeichervorrichtung, die ein Programm von Befehlen faßbar verkörpert, die durch die Maschine ausführbar sind, um Verfahrensschritte zum Anzeigen einer Folge von n digitalen Bildern I$_1$, ... I$_n$ von jeweils n Trennmustern durchzuführen, wobei die digitalen Bilder durch Grauwertfunktionen beschrieben sind, die an einer Pixelmenge definiert sind, wobei das Verfahren die folgenden Schritte aufweist:

a Überdecken der Folge von Bildern nach Anspruch 36, um eine zweite Folge von Bildern I'$_1$, I'$_2$ ... I'$_n$ zu erzeugen, wobei I'$_1$ das Bild I$_1$ ist und I'$_k$ das modifizierte Bild von I$_k$ für k von 2 bis n ist; und
b aufeinanderfolgendes Anzeigen der zweiten Folge von Bildern I'$_1$, ... I'$_n$ auf einer Anzeige.

44. Computerprogrammprodukt mit einem computerverwendbaren Medium mit darin verkörpertem computerlesbarem Programmcode zum Anzeigen einer Folge von n digitalen Bildern I$_1$, ... I$_n$ von jeweils n Trennmustern, wobei die digitalen Bilder durch Grauwertfunktionen beschrieben sind, die an einer Pixelmenge definiert sind, wobei das Computerprogrammprodukt aufweist:

a computerlesbaren Programmcode zum Veranlassen, daß der Computer die Folge von Bildern nach Anspruch 36 überdeckt, um eine zweite Folge von Bildern I'$_1$, I'$_2$ ... I'$_n$ zu erzeugen, wobei I'$_1$ das Bild I$_1$ ist und I'$_k$ das modifizierte Bild von I$_k$ für k von 2 bis n ist; und
b computerlesbaren Programmcode zum Veranlassen, daß der Computer die zweite Folge von Bildern I'$_1$, ... I'$_n$ nacheinander auf einer Anzeige anzeigt.

45. Maschinenlesbare Programmspeichervorrichtung, die ein Programm von Befehlen faßbar verkörpert, die durch die Maschine ausführbar sind, um Verfahrensschritte zum Anzeigen einer Folge von n digitalen Bildern I$_1$, ... I$_n$ von jeweils n Trennmustern durchzuführen, wobei die digitalen Bilder durch Grauwertfunktionen beschrieben sind, die an einer Pixelmenge definiert sind, wobei das Verfahren die folgenden Schritte aufweist:

a Überdecken der Folge von Bildern nach Anspruch 37, um eine zweite Folge von Bildern I'$_1$, I'$_2$ ... I'$_n$ zu erzeugen, wobei I'$_k$ das modifizierte Bild von I$_k$ ist; und

b aufeinanderfolgendes Anzeigen der zweiten Folge von Bildern $I'_1$, ... $I'_n$ auf einer Anzeige.

**46.** Computerprogrammprodukt mit einem computerverwendbaren Medium mit darin verkörpertem computerlesbarem Programmcode zum Anzeigen einer Folge von n digitalen Bildern $I_1$, ... $I_n$ von jeweils n Trennmustern, wobei die digitalen Bilder durch Grauwertfunktionen beschrieben sind, die an einer Pixelmenge definiert sind, wobei das Computerprogrammprodukt aufweist:

a computerlesbaren Programmcode zum Veranlassen, daß der Computer die Folge von Bildern nach Anspruch 37 überdeckt, um eine zweite Folge von Bildern $I'_1$, $I'_2$ ... $I'_n$ zu erzeugen, wobei $I'_k$ das modifizierte Bild von $I_k$ ist; und

b computerlesbaren Programmcode zum Veranlassen, daß der Computer die zweite Folge von Bildern $I'_1$, ... $I'_n$ nacheinander auf einer Anzeige anzeigt.

**Revendications**

**1.** Procédé pour enregistrer respectivement des première et deuxième images digitales de premier et deuxième motifs de séparation, les images digitales étant décrites respectivement par des fonctions de niveau gris $f_1$ et $f_2$, définies sur un ensemble de pixels, le procédé comprenant les étapes consistant à :

a diviser au moins une partie de l'ensemble de pixels en m régions $R_1$, ...$R_k$, ... $R_m$, les m régions apparaissant chacune sur la première image ;
b pour chaque région $R_k$,

ba sélectionner une séquence finie de $n_k$ transformations $S_{k,1}$, ..., $S_{k,j}$, ... $S_{k,nk}$, chaque transformation appliquant $R_k$ sur l'ensemble de pixels de la deuxième image ;
bb générer $n_k$ régions $S_{kj}(R_k)$ pour j=1, ... $n_k$ dans l'ensemble de pixels, les $n_k$ régions apparaissant chacune sur la deuxième image digitale ;
bc calculer une note de similarité pour chacune des $n_k$ régions $S_{k,j}(R_k)$ pour j=1, ... $n_k$, la note de similarité notant la similarité de l'apparence de $R_k$ dans la première image digitale et l'apparence $S_{kj}(R_k)$ dans la deuxième image digitale ;
bd sélectionner une transformation $S_k$ parmi les $n_k$ transformations $S_{k,1}$, ... $S_{k,j}$, ... $S_{k,nk}$, pour lesquelles la note de similarité de $S_k(R_k)$ est maximale parmi les notes de similarité de $S_{kj}(R_k)$ pour j=1, ... $n_k$ ; et
be sélectionner un pixel $p_k$ dans $R_k$ ;

c définir une transformation globale T qui applique au moins une partie de l'ensemble de pixels sur un ensemble de la deuxième image en se basant sur au moins certains des $S_k(p_k)$, la transformation T ayant une inverse $T^{-1}$, la deuxième image digitale ayant une image sous $T^{-1}$ ; et
d obtenir l'image de la seconde image sous $T^{-1}$, pour produire une seconde image modifiée à utiliser pour être enregistrée avec la première image,

**caractérisé en ce que** la note de similarité est obtenue dans un processus impliquant la comparaison de la valeur de $f_1$ à un pixel x dans la région $R_k$ avec la valeur de $f_1$ à un pixel voisin x, et impliquant en outre la comparaison de la valeur de $f_2$ au pixel $S_{k,j}$ (x) avec la valeur de $f_2$ au pixel voisin $S_{k,j}$ (x).

**2.** Procédé selon la revendication 1 dans lequel les premier et deuxième motifs de séparation sont des motifs de séparation unidimensionnels.

**3.** Procédé selon la revendication 1 dans lequel les premier et deuxième motifs de séparation sont des motifs de séparation bidimensionnels.

**4.** Procédé selon l'une quelconque des revendications précédentes dans lequel les premier et deuxième motifs de séparation sont obtenus en utilisant une technique de séparation sélectionnée dans la liste comprenant :

(a) électrophorèse ;
(b) chromatographie sur papier ;
(c) chromatographie sur couche mince ;
(d) chromatographie sur liquide sous haute pression ; et

(e) spectroscopie de masse.

**5.** Procédé selon l'une quelconque des revendications précédentes dans lequel le nombre de régions, m, est égal à un.

**6.** Procédé selon l'une quelconque des revendications précédentes dans lequel une ou plusieurs régions $R_k$ contient exactement un pixel.

**7.** Procédé selon l'une quelconque des revendications précédentes dans lequel une ou plusieurs régions $R_k$ sont des rectangles.

**8.** Procédé selon l'une quelconque des revendications précédentes dans lequel les régions $R_k$ sont des rectangles qui sont disposés régulièrement sur la première image.

**9.** Procédé selon l'une quelconque des revendications précédentes dans lequel l'étape consistant à diviser au moins une partie de l'ensemble de pixels en m régions $R_k$ pour k=1 à k=m comprend les étapes consistant à désigner une fonction de notation, la fonction de notation notant des régions dans l'ensemble de pixels et sélectionnant des régions $R_k$ pour k=1 à m, où chaque région a une note plus grande qu'une valeur prédéterminée.

**10.** Procédé selon la revendication 9 dans lequel la fonction de notation comprend l'expression algorithmique s=$a$[n] c, dans lequel n est le nombre de points dans une région, c est le contraste moyen des points et $a$[n] est une fonction dépendant du nombre de points dans la région.

**11.** Procédé selon la revendication 10 dans lequel a[n] a un maximum pour n à peu près égal à 3.

**12.** Procédé selon l'une quelconque des revendications précédentes dans lequel une ou plusieurs des transformations $S_{k,j}$ est du type sélectionné à partir de la liste comprenant :

(a) translations ;
(b) transformations linéaires ; et
(c) transformations affines.

**13.** Procédé selon l'une quelconque des revendications précédentes dans lequel la note de similarité est obtenue dans un processus impliquant un gradient de $f_1$ au pixel x dans $R_k$ et un gradient de $f_2$ au pixel $S_{k,j}$(x).

**14.** Procédé selon l'une quelconque des revendications précédentes dans lequel la note de similarité est obtenue dans un processus impliquant la détermination d'une image de contraste d'arrière-plan de la première image et d'une image de contraste d'arrière-plan de la deuxième image.

**15.** Procédé selon la revendication 13 dans lequel la note de similarité notant la similarité de l'apparence de $R_k$ dans la première image et de l'apparence de $S_{k,j}(R_k)$ dans la deuxième image est donnée par l'expression arithmétique $\Sigma psf$(x, $S_{k,j}$(x)) dans lequel la somme est comptée sur tous les x dans $R_k$ et

$$Psf(x,\, y) = 1 + \alpha \, \min(B_1(x), B_2(y) + \beta \,(\triangledown(f_1(x)),$$

$$\triangledown(f_2\,(y)))^{1/2}$$

pour quelconque couple de pixels x et y, où $B_1$ et $B_2$ sont respectivement les images de contraste d'arrière-fond des première et deuxième images digitales, et $\alpha$ et $\beta$ sont deux constantes prédéterminées.

**16.** Procédé selon l'une quelconque des revendications précédentes dans lequel la transformation globale est une fonction spline.

**17.** Procédé selon l'une quelconque des revendications 1 à 16 dans lequel la transformation globale est une transformation de triangulation de Delaunay.

**18.** Dispositif de stockage de programme lisible par machine incorporant manifestement un programme d'instructions exécutables par la machine pour effectuer les étapes du procédé afin d'enregistrer respectivement les première et deuxième images digitales des premier et deuxième motifs de séparation, les images digitales étant décrites respectivement par les fonctions de niveau de gris $f_1$ et $f_2$, définies sur un ensemble de pixels, l'enregistrement comprenant les étapes consistant à :

    a diviser au moins une partie de l'ensemble de pixels en m régions $R_1$, ...$R_k$, ... $R_m$, les m régions apparaissant chacune sur la première image ;
    b pour chaque région $R_k$,

        ba sélectionner une séquence finie de $n_k$ transformations $S_{k,1}$, ...$S_{k,j}$, ... $S_{k,nk}$, chaque transformation appliquant $R_k$ sur l'ensemble de pixels de la deuxième image ;
        bb générer $n_k$ régions $S_{k,j}(R_k)$ pour j=1, ... $n_k$, les $n_k$ régions apparaissant chacune dans la deuxième image ;
        bc calculer une note de similarité pour chacune des $n_k$ régions $S_{k,j}(R_k)$ pour j=1, ... $n_k$, la note de similarité notant l'apparence de $R_k$ dans la première image et l'apparence de $S_{kj}(R_k)$ dans la deuxième image;
        bd sélectionner une transformation $S_k$ parmi les $n_k$ transformations $S_{k,1}$ ..., $S_{k,j}$ ... $S_{k,nk}$ pour lesquelles la note de similarité de $S_k(R_k)$ est maximale parmi les notes de similarité de $S_{kj}(R_k)$ pour j=1, ... $n_k$ ;
        be sélectionner un pixel $p_k$ dans $R_k$ ;

    c définir une transformation globale T qui applique au moins une partie de l'ensemble de pixels sur l'ensemble de pixels de la deuxième image en se basant sur au moins certains des $S_k(p_k)$, la transformation T ayant une inverse $T^{-1}$, la deuxième image ayant une image sous $T^{-1}$ ; et
    d obtenir l'image de la seconde image sous $T^{-1}$, pour produire une deuxième image modifiée à utiliser pour être enregistrée avec la première image,

    **caractérisé en ce que** la note de similarité est obtenue dans un processus impliquant la comparaison de la valeur de $f_1$ à un pixel x dans la région $R_k$ avec la valeur de $f_1$ à un pixel voisin x, et impliquant en outre la comparaison de la valeur de $f_2$ au pixel $S_{k,j}(x)$ avec la valeur de $f_2$ au pixel voisin $S_{k,j}(x)$.

19. Dispositif de stockage de programme selon la revendication 18 dans lequel les premier et deuxième motifs de séparation sont des motifs de séparation unidimensionnels.

20. Dispositif de stockage de programme selon la revendication 18 dans lequel les premier et deuxième motifs de séparation sont des motifs de séparation bidimensionnels.

21. Dispositif de stockage de programme selon l'une quelconque des revendications précédentes dans lequel les premier et deuxième motifs de séparation sont obtenus en utilisant une technique de séparation sélectionnée dans la liste comprenant :

    (a) électrophorèse ;
    (b) chromatographie sur papier ;
    (c) chromatographie sur couche mince ;
    (d) chromatographie sur liquide sous haute pression ; et
    (e) spectroscopie de masse.

22. Dispositif de stockage de programme selon l'une quelconque des revendications 18 à 21 dans lequel le nombre de régions, m, est égal à un.

23. Média de stockage de programme selon l'une quelconque des revendications 18 à 22 dans lequel une ou plusieurs régions $R_k$ contient exactement un pixel.

24. Média de stockage selon l'une quelconque des revendications 18 à 23 dans lequel une ou plusieurs régions $R_k$ sont des rectangles.

25. Dispositif de stockage de programme selon l'une quelconque des revendications 18 à 24 dans lequel les régions $R_k$ sont des rectangles qui sont rangés régulièrement dans la première image.

26. Dispositif de stockage de programme selon l'une quelconque des revendications 18 à 25 dans lequel l'étape consistant à diviser au moins une partie de l'ensemble de pixels en m régions $R_k$ pour k=1 à k=m comprend les étapes consistant à désigner une fonction de notation, la fonction de notation notant des régions dans l'ensemble de pixels et à sélectionner des régions $R_k$ pour k=1 à m, où chaque région a une note plus grande qu'une valeur prédéterminée.

27. Dispositif de stockage de programme selon la revendication 26 dans lequel la fonction de notation comprend l'expression algorithmique s=$a$[n]c, dans laquelle n est le nombre de points dans une région, c est le contraste moyen des points et $a$[n] est une fonction dépendant du nombre de points dans la région.

28. Dispositif de stockage de programme selon la revendication 27 dans lequel $a$[n] a un maximum pour n à peu près égal à 3.

29. Dispositif de stockage de programme selon une quelconque des revendications 18 à 28 dans lequel une ou plusieurs des transformations $S_{k,j}$ est du type sélectionné à partir de la liste comprenant :

   (a) translations ;
   (b) transformations linéaires ; et
   (c) transformations affines.

30. Dispositif de stockage de programme selon l'une quelconque des revendications 18 à 29 dans lequel la note de similarité est obtenue dans un processus impliquant un gradient de $f_1$ au pixel x dans $R_k$ et un gradient de $f_2$ au pixel $S_{k,j}$(x).

31. Dispositif de stockage de programme selon l'une quelconque des revendications 18 à 30 dans lequel la note de similarité est obtenue dans un processus impliquant la détermination d'une image de contraste d'arrière-plan de la première image et d'une image de contraste d'arrière-plan de la deuxième image.

32. Dispositif de stockage de programme selon la revendication 30 ou 31 dans lequel la note de similarité notant la similarité de l'apparence de $R_k$ dans la première image et de l'apparence de $S_{k,j}(R_k)$ dans la deuxième image est donnée par l'expression arithmétique $\Sigma$ $psf$(x, $S_{kj}$(x)) dans laquelle la somme est comptée sur tous les x dans $R_k$ et

$$Psf(x, y) = 1 + \alpha \min(B_1(x), B_2(y) + \beta (\nabla(f_1(x)), \nabla(f_2(y)))^{1/2}$$

pour quelconque couple de pixels x et y de l'ensemble de pixels, où $B_1$ et $B_2$ sont respectivement les images de contraste d'arrière-fond des première et deuxième images digitales et $\alpha$ et $\beta$ sont des constantes prédéterminées.

33. Dispositif de stockage de programme selon l'une quelconque des revendications 18 à 32 dans lequel la transformation globale est une fonction spline.

34. Dispositif de stockage de programme selon l'une quelconque des revendications 18 à 32 dans lequel la transformation globale est une transformation de triangulation de Delaunay.

35. Produit de programme d'ordinateur qui y incorpore un code de programme lisible par ordinateur pour enregistrer respectivement des première et deuxième images digitales de premier et deuxième motifs de séparation, les images digitales étant décrites respectivement par les fonctions de niveau de gris $f_1$ et $f_2$, définies sur un ensemble de pixels, l'enregistrement comprenant les étapes consistant à :

   a diviser au moins une partie de l'ensemble de pixels en m régions $R_1$, ...$R_k$, ... $R_m$, les m régions apparaissant chacune sur la première image ;
   b pour chaque région $R_k$ :

      ba sélectionner une séquence finie de $n_k$ transformations $S_{k,1}$ ..., $S_{k,j}$ ... $S_{k,nk}$, chaque transformation appliquant $R_k$ sur l'ensemble de pixels de la deuxième image ;
      bb générer $n_k$ régions $S_{kj}(R_k)$ pour j=1, ... $n_k$ dans la deuxième image digitale, les $n_k$ régions apparaissant chacune dans la deuxième image ;
      bc calculer une note de similarité pour chacune des $n_k$ régions $S_{k,j}(R_k)$ pour j=1, ... $n_k$, la note de similarité notant l'apparence de $R_k$ dans la première image et l'apparence de $S_{kj}(R_k)$ dans la deuxième image ;

bd sélectionner une transformation $S_k$ parmi les $n_k$ transformations parmi les transformations $S_{k,1}$ ..., $S_{k,j}$ ... $S_{k,nk}$, pour lesquelles la note de similarité de $S_k(R_k)$ est maximale parmi les notes de similarité de $S_{kj}(R_k)$ pour j=1, ... $n_k$ ;

c définir une transformation globale T qui applique au moins une partie des pixels sur un ensemble de la deuxième image en se basant sur au moins certains des $S_k(p_k)$, la transformation T ayant une inverse T, la deuxième image digitale ayant une image sous $T^{-1}$ ; et

d obtenir l'image de la seconde image sous $T^{-1}$, pour produire une seconde image modifiée à utiliser pour être enregistrée avec la première image,

**caractérisé en ce que** la note de similarité est obtenue dans un processus impliquant la comparaison de la valeur de $f_1$ à un pixel x dans la région $R_k$ avec la valeur de $f_1$ à un pixel voisin x, et impliquant en outre la comparaison de la valeur de $f_2$ au pixel $S_{k,j}(x)$ avec la valeur de $f_2$ au pixel voisin $S_{k,j}(x)$.

**36.** Procédé pour enregistrer respectivement une séquence de n images digitales $I_1$, ... $I_n$, de n motifs de séparation, les images digitales étant décrites par des fonctions de niveau de gris définies sur l'ensemble de pixels, le procédé comprenant les étapes consistant à :

a enregistrer les images digitales $I_1$ et $I_2$ selon l'une quelconque des revendications 1 à 17 pour produire une image $I'_2$ qui est une image modifiée de $I_2$ ;

b enregistrer $I'_k$ et $I_{k+1}$ pour tous les k de 2 à n-1 selon l'une quelconque des revendications 1 à 17 pour produire une image $I'_{k+1}$, où $I'_k$ et $I'_{k+1}$ sont respectivement les images modifiées de $I_k$ et $I_{k+1}$.

**37.** Procédé pour enregistrer respectivement une séquence de n images digitales $I_1$, ... $I_n$, de n motifs de séparation, les images digitales étant décrites par des fonctions de niveau de gris définies sur l'ensemble de pixels, le procédé comprenant l'enregistrement d'un motif père et de l'image $I_k$ selon l'une quelconque des revendications 1 à 17 de manière à produire une image $I'_k$, où $I'_k$ est l'image modifiée de $I_k$, pour tous les k de 1 à n.

**38.** Procédé pour afficher respectivement une séquence de n images digitales $I_1$, ... $I_n$, de n motifs de séparation, les images digitales étant décrites par des fonctions de niveau de gris définies sur l'ensemble de pixels, le procédé comprenant les étapes consistant à :

a enregistrer la séquence d'images selon la revendication 36 de manière à produire une deuxième séquence d'images $I'_1$, $I'_2$, ... $I'_n$ où $I'_1$ est l'image modifiée de $I_1$ et $I'_k$ de $I_k$, pour k de 2 à n ; et

b afficher la deuxième séquence d'images $I'_1$, ... $I'_n$ de manière séquentielle sur un moniteur.

**39.** Procédé pour afficher respectivement une séquence de n images digitales $I_1$, ... $I_n$ de n motifs de séparation, les images digitales étant décrites par des fonctions de niveau de gris définies sur l'ensemble de pixels, le procédé comprenant les étapes consistant à :

a enregistrer la séquence d'images selon la revendication 37, de manière à produire une deuxième séquence d'images $I'_1$, $I'_2$, ... $I'_n$ où $I'_k$ est l'image modifiée de $I_k$; et

b afficher la deuxième séquence d'images $I'_1$, ... $I'_n$ de manière séquentielle sur un moniteur.

**40.** Dispositif de stockage de programme lisible par machine, incorporant manifestement un programme d'instructions exécutables par la machine pour effectuer les étapes du procédé afin d'enregistrer respectivement une séquence de n images digitales $I_1$, ... $I_n$ de n motifs de séparation, les images digitales étant décrites par des fonctions de niveau de gris définies sur un ensemble de pixels, le procédé comprenant les étapes consistant à :

a enregistrer les images digitales $I_1$ et $I_2$ selon l'une quelconque des revendications 1 à 17 pour produire une image $I'_2$ qui est l'image modifiée de $I_2$;

b enregistrer $I'_k$ et $I_{k+1}$ pour tous les k de 2 à n-1 selon l'une quelconque des revendications 1 à 17 pour produire une image $I'_{k+1}$ où $I'_k$ et $I'_{k+1}$ sont respectivement des images modifiées de $I_k$ et $I_{k+1}$.

**41.** Produit de programme d'ordinateur comprenant un média utilisable par ordinateur ayant un code de programme lisible par ordinateur qui y est incorporé pour enregistrer respectivement une séquence de n images digitales $I_1$, ... $I_n$ de n motifs de séparation, les images digitales étant décrites par des fonctions de niveau de gris définies sur un ensemble de pixels, le produit de programme d'ordinateur comprenant :

    a un code de programme lisible par ordinateur pour faire que l'ordinateur enregistre les images digitales $I_1$ et $I_2$ selon l'une quelconque des revendications 1 à 17 ; pour produire une image $I'_2$ qui est l'image modifiée de $I_2$ ;

    b un code de programme lisible par ordinateur pour faire que l'ordinateur enregistre $I'_k$ et $I_{k+1}$ pour tous les k de 2 à n-1, selon l'une quelconque des revendications 1 à 17 afin de produire une image $I'_{k+1}$, où $I'_k$ et $I'_{k+1}$ sont respectivement les images modifiées de $I_k$ et $I_{k+1}$.

42. Dispositif de stockage de programme lisible par machine, incorporant manifestement un programme d'instructions exécutables par la machine pour effectuer les étapes du procédé afin d'enregistrer respectivement une séquence de n images digitales $I_1$, ... $I_n$ de n motifs de séparation, les images digitales étant décrites par des fonctions de niveau de gris définies sur un ensemble de pixels, le procédé comprenant les étapes consistant à enregistrer un motif père et l'image $I_k$ selon l'une quelconque des revendications 1 à 17 de manière à produire une image $I'_k$ où $I'_k$ est l'image modifiée de $I_k$, pour tous les k de 1 à n.

43. Dispositif de stockage de programme lisible par machine, incorporant manifestement un programme d'instructions exécutables par la machine pour effectuer les étapes du procédé afin d'afficher respectivement une séquence de n images digitales $I_1$, ... $I_n$ de n motifs de séparation, les images digitales étant décrites par des fonctions de niveau de gris définies sur un ensemble de pixels, le procédé comprenant les étapes consistant à :

    a enregistrer la séquence d'images selon la revendication 36 de manière à produire une deuxième séquence d'images $I'_1$, $I'_2$ ... $I'_n$, où $I'_1$ est l'image $I_1$ et $I'_k$ est l'image modifiée de $I_k$, pour tous les k de 2 à n ; et

    b afficher la deuxième séquence d'images $I'_1$, ... $I'_n$ de manière séquentielle sur un moniteur.

44. Produit de programme d'ordinateur comprenant un média utilisable par ordinateur ayant un code de programme lisible par ordinateur incorporé dans celui-ci pour l'affichage respectif d'une séquence de n images digitales $I_1$ ... $I_n$ de n motifs de séparation, les images digitales étant décrites par des fonctions de niveau de gris définies sur un ensemble de pixels, le produit de programme d'ordinateur comprenant :

    a un code de programme lisible par ordinateur pour faire que l'ordinateur enregistre la séquence d'images selon la revendication 36, de manière à produire une deuxième séquence d'images $I'_1$, $I'_2$ ... $I'_n$, où $I'_1$ est l'image de $I_1$ et $I'_k$ est l'image modifiée de $I_k$, pour k allant de 2 à n ; et

    b un code de programme lisible par ordinateur pour faire que le l'ordinateur affiche la deuxième séquence d'images $I'_1$, ... $I'_n$ de manière séquentielle sur un moniteur.

45. Dispositif de stockage de programme lisible par machine, incorporant manifestement un programme d'instructions exécutables par la machine pour effectuer les étapes du procédé afin d'afficher respectivement une séquence de n images digitales $I_1$ ... $I_n$ de n motifs de séparation, les images digitales étant décrites par des fonctions de niveau de gris définies sur l'ensemble des pixels, le procédé comprenant les étapes consistant à :

    a enregistrer la séquence d'images selon la revendication 37 de manière à produire une deuxième séquence d'images $I'_1$, $I'_2$ ... $I'_n$, où $I'_k$ est l'image modifiée de $I_k$ ; et

    b afficher la deuxième séquence d'images $I'_1$, ... $I'_n$ de manière séquentielle sur un moniteur.

46. Produit de programme d'ordinateur comprenant un média utilisable par ordinateur ayant un code de programme lisible par ordinateur qui y est incorporé pour afficher respectivement une séquence de n images digitales $I_1$ ... $I_n$ de n motifs de séparation, les images digitales étant décrites par des fonctions de niveau de gris définies sur l'ensemble des pixels, le programme d'ordinateur comprenant :

    a un code de programme lisible par ordinateur pour faire que l'ordinateur enregistre la séquence d'images selon la revendication 37 de manière à produire une deuxième séquence d'images $I'_1$, $I'_2$ ... $I'_n$, où $I'_k$ est l'image modifiée de $I_k$ ; et

    b un code de programme lisible par ordinateur pour faire que l'ordinateur affiche la deuxième séquence d'images $I'_1$, ... $I'_n$ de manière séquentielle sur un moniteur.

FIG. 1A

FIG. 1B

FIG. 1C

FIG. 1D

FIG. 2A

FIG. 2B

FIG. 2C

FIG. 2D

FIG. 3A

FIG. 3B

FIG. 3C

FIG. 3D